# EUROPEAN PATENT APPLICATION

(11) **EP 4 510 638 A1**
(43) Date of publication of application: **19.02.2025**
(21) Application number: 23799186.4
(22) Date of filing: 21.04.2023
(51) Int. Cl.: H04W 4/02, H04W 36/00, H04W 36/08, H04W 36/10, H04W 80/10

(54) **COMMUNICATION METHOD AND DEVICE IN ROAMING SCENE**

(30) Priority: 02.05.2022 CN 202210477096
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN)
(74) Representative: Goddar, Heinz J.
(86) International application number: PCT/CN2023/089905
(87) International publication number: WO 2023/213199

(57) **Abstract**

A communications method in a roaming scenario and an apparatus are provided, to resolve a problem that UE cannot be triggered to query an EAS in an existing HR scenario. The method includes: determining, by an H-SMF, a DNAI change corresponding to UE location; and sending, by the H-SMF, a first message to a V-SMF based on the DNAI change corresponding to the location of the UE. The V-SMF herein is a V-SMF that provides a service for the UE after the DNAI corresponding to the UE location changes. The first message indicates the V-SMF to send a session modification command to the UE, and the session modification command indicates the UE to re-query the EAS. In this way, if the H-SMF determines that the DNAI corresponding to the UE location changes, the H-SMF may trigger the V-SMF to send the session modification command to the UE, so that the UE re-queries the EAS. Therefore, when UE's movement causes the DNAI to change, the UE can query, in a timely manner, an EAS that serves the UE and that is close to the UE.

## Description

### CROSS-REFERENCE TO RELATED APPLICATIONS

This application claims priority to Chinese Patent Application No. 202210477096.5, filed with the China National Intellectual Property Administration on May 2, 2022 and entitled "COMMUNICATIONS METHOD IN ROAMING SCENARIO AND APPARATUS", which is incorporated herein by reference in its entirety.

### TECHNICAL FIELD

This application relates to the field of communications technologies, and in particular, to a communications method in a roaming scenario and an apparatus.

### BACKGROUND

In a country or a region, a cellular mobile communications network of a standard of an operator is referred to as a PLMN (public land mobile network, public land mobile network). A PLMN to which user equipment (user equipment, UE) subscribes is referred to as a home-PLMN (home-PLMN, H-PLMN), and represents a home operator of a subscriber. When UE leaves coverage of the H-PLMN due to movement or another reason, the UE may access a visited-PLMN (visited-PLMN, V-PLMN). A process in which the UE accesses the V-PLMN may be referred to as roaming, where the roaming may further include home routed (home routed, HR) roaming.

Further, with the explosive growth of mobile service traffic, the industry proposes a concept of edge computing (edge computing, EC). In the EC, a user plane function (user plane function, UPF) and a service processing capability are moved to a network edge, so that local processing of distributed service traffic is implemented, making low-latency service access possible.

In an HR roaming scenario, how to trigger UE to query an edge application server (edge application server, EAS) that is configured to provide an EC service for the UE is a technical problem that needs to be urgently resolved currently.

### SUMMARY

This application provides a communications method in a roaming scenario and an apparatus, which are applicable to an HR roaming scenario. When UE's movement causes a change of a data network access identifier (data network access identifier, DNAI) corresponding to a UE location, the UE is triggered to re-query an EAS.

According to a first aspect, this application provides a communications method in a roaming scenario. The method includes: A home session management function (home session management function, H-SMF) determines that a DNAI corresponding to a UE location changes; and the H-SMF sends a first message to a visited session management function (visited session management function, V-SMF) based on that the DNAI corresponding to the UE location changes. The V-SMF herein is a V-SMF that provides a service for UE after the DNAI corresponding to the UE location changes, the first message indicates the V-SMF to send a session modification command to the UE, and the session modification command indicates the UE to re-query an EAS. In the foregoing technical solution, if the H-SMF determines that the DNAI corresponding to the UE location changes, the H-SMF may trigger the V-SMF to send the session modification command to the UE, so that the UE re-queries the EAS. Therefore, when UE's movement causes the DNAI to change, the UE can query, in a timely manner, an EAS that serves the UE and that is close to the UE.

In a possible implementation, before determining that the DNAI corresponding to the UE location changes, the H-SMF may further receive a third message from the V-SMF. The third message may include one or more of the following: a first DNAI, first service information corresponding to the first DNAI, a second DNAI, second service information corresponding to the second DNAI, and first indication information.

The first DNAI is a DNAI used before the DNAI corresponding to the UE location changes. Alternatively, it is understood that a location (or referred to as an old location or an old location) used before the UE's movement corresponds to the first DNAI (or referred to as an old DNAI or an old DNAI).

The first service information (or referred to as old service information or old service information) corresponding to the first DNAI may be specifically service information corresponding to the old DNAI in EC deployment information of a V-PLMN.

The second DNAI is a DNAI obtained after the DNAI corresponding to the UE location changes. Alternatively, it is understood that a location (or referred to as a new location or a new location) obtained after the UE's movement corresponds to the second DNAI (or referred to as a new DNAI or a new DNAI).

The second service information (or referred to as new service information or new service information) corresponding to the second DNAI may be specifically service information corresponding to the new DNAI in the EC deployment information of the V-PLMN.

The service information may specifically include a full qualified domain name (full qualified domain name, FQDN) and/or an EAS network interconnection protocol (internet protocol, IP) address.

The first indication information indicates that the DNAI corresponding to the UE location changes.

In case 1, the UE at the old location corresponds to the old DNAI, and the UE at the new location corresponds to the new DNAI. That is, that the DNAI corresponding to the UE location changes is specifically: the old DNAI changes to the new DNAI.

In example 1 of case 1, when the UE is at both the old location and at the new location, the UE may be served by a same V-SMF.

Correspondingly, the H-SMF may receive the third message from the V-SMF, where the third message may include the old DNAI and the new DNAI; or the third message may include the old DNAI, the new DNAI, the old service information, and the new service information; or the third message may include the old service information and the new service information; or the third message is specifically any one of the first indication information, the old DNAI, the new DNAI, the old service information, or the new service information. In addition, the V-SMF may further include the first indication information, together with the DNAI or the service information, in the third message, and then send the third message to the H-SMF. Certainly, there may be another manner, and examples are not enumerated one by one in this application.

In example 2 of case 1, when the UE is at both the old location and at the new location, the UE may be served by different V-SMFs. A V-SMF that serves the UE that is at the old location may be referred to as an old V-SMF, and a V-SMF that serves the UE that is at the new location may be referred to as a new V-SMF.

Correspondingly, the H-SMF may receive the third message from the new V-SMF. Composition of the third message may be similar to that in example 1 of case 1, and details are not described again. Further, the new V-SMF may obtain the old DNAI and/or the old service information from a second network element. Optionally, the new V-SMF may further obtain authorization information from the second network element, where the authorization information indicates that V-PLMN traffic steering is allowed. The second network element may be specifically the old V-SMF or the H-SMF.

In example 3 of case 1, when the UE is at the old location, the UE is served by the H-SMF; and when the UE is at the new location, the UE is served by the V-SMF.

Correspondingly, the H-SMF may receive the third message from the V-SMF. Composition of the third message may be similar to that in example 1 of case 1, and details are not described again. Optionally, the V-SMF may obtain the old service information from the H-SMF. Optionally, the V-SMF may further obtain authorization information from the H-SMF, where the authorization information indicates that the V-PLMN traffic steering is allowed.

In case 2, the UE at the old location corresponds to the old DNAI, and the UE at the new location does not correspond to the new DNAI. That is, that the DNAI corresponding to the UE location changes is specifically: the old DNAI is deleted.

In example A of case 2, when the UE is at both the old location and at the new location, the UE may be served by a same V-SMF.

Correspondingly, the H-SMF may receive the third message from the V-SMF. The third message may include the old DNAI, or may include the old service information, or may include the old DNAI and the old service information, or the third message is specifically the first indication information. In addition, the V-SMF may include the first indication information, together with the old DNAI or the old service information, in the third message, and then send the third message to the H-SMF. In an example, the first indication information is, for example, a new special DNAI and/or new special service information. In another example, the third message does not include any DNAI. Certainly, there may be another manner, and examples are not enumerated one by one in this application.

In example B of case 2, when the UE is at the old location, the UE is served by the old V-SMF; and when the UE is at the new location, the UE is served by the new V-SMF. Correspondingly, the H-SMF may receive the third message from the new V-SMF. Composition of the third message may be similar to that in example A of case 2, and details are not described again. Optionally, the new V-SMF may obtain the old DNAI and/or the old service information from a second network element. Optionally, the new V-SMF may further obtain authorization information from the second network element, where the authorization information indicates that the V-PLMN traffic steering is allowed. The second network element may be specifically the old V-SMF or the H-SMF.

In example C of case 2, when the UE is at the old location, the UE is served by the H-SMF; and when the UE is at the new location, the UE is served by the new V-SMF. Correspondingly, the H-SMF may receive the third message from the V-SMF. Composition of the third message may be similar to that in example A of case 2, and details are not described again. Optionally, the V-SMF may obtain the old service information from the H-SMF. Optionally, the V-SMF may further obtain authorization information from the H-SMF, where the authorization information indicates that the V-PLMN traffic steering is allowed.

In case 3, the UE at the old location does not correspond to the old DNAI, and the UE at the new location corresponds to the new DNAI. That is, that the DNAI corresponding to the UE location changes is specifically inserting the new DNAI.

In example a of case 3, when the UE is at both the old location and at the new location, the UE may be served by a same V-SMF.

Correspondingly, the H-SMF may receive the third message from the V-SMF. The third message may be the new DNAI, or may be new service information, or may include the new DNAI and the new service information, or the third message is specifically the first indication information. In addition, the V-SMF may include the first indication information, together with the new DNAI or the new service information, in the third message, and then send the third message to the H-SMF. The first indication information is, for example, an old special DNAI and/or old special service information. Certainly, there may be another manner, and examples are not enumerated one by one in this application.

In example b of case 3, when the UE is at the old location and at the new location, the UE may be separately served by the old V-SMF and the new V-SMF. Correspondingly, the H-SMF may receive the third message from the new V-SMF. Composition of the third message may be similar to that in example a of case 2, and details are not described again. Optionally, the new V-SMF may further obtain authorization information from a second network element, where the authorization information indicates that the V-PLMN traffic steering is allowed, and the second network element may be specifically the old V-SMF or the H-SMF.

In example c of case 3, when the UE is at the old location, the UE is served by the H-SMF; and when the UE is at the new location, the UE may be served by the V-SMF. Correspondingly, the H-SMF may receive the third message from the V-SMF. Composition of the third message may be similar to that in example a of case 3, and details are not described again. Optionally, the V-SMF may further obtain authorization information from the H-SMF, where the authorization information indicates that the V-PLMN traffic steering is allowed.

In the foregoing technical solutions, the H-SMF may receive one or more of the old DNAI, the old service information, the new DNAI, the new service information, and the first indication information that are from the V-SMF, so that the H-SMF determines that the DNAI corresponding to the UE location changes.

In a possible implementation, the H-SMF may further receive a context request from the V-SMF, and correspondingly, the H-SMF sends a context response to the V-SMF. Optionally, the context response includes the old service information, where the old service information is service information corresponding to the old DNAI. Optionally, the context request is a PDU session context request, and the context response is a PDU session context response; or the context request is a PDU session create request, and the context response is a PDU session create response; or the context request is a PDU session update request, and the context response is a PDU session update response. In this way, the V-SMF may obtain the old service information from the H-SMF in a session procedure, to determine, based on the old service information and that the UE needs to re-query service information of the EAS, and send the session modification command to the UE.

In a possible implementation, the first message includes one or more of the following: the old service information, the new service information, third service information, and second indication information. The third service information is determined based on the old service information and the new service information. The second indication information indicates the V-SMF to send the session modification command to the UE; or the second indication information indicates the V-SMF to send the session modification command to the UE after determining one or more of the old service information, the new service information, and the third service information.

Specifically, in the foregoing case 1, the H-SMF may send the first message to the V-SMF, and the first message may include one or more of the old service information, the new service information, the third service information, and the second indication information.

In the foregoing case 2, the H-SMF may send the first message to the V-SMF, and the first message may include one or more of the new service information and the second indication information.

In the foregoing case 3, the H-SMF may send the first message to the V-SMF, and the first message may include one or more of the old service information and the second indication information.

Optionally, when the first message includes the service information (one or more of the old service information, the new service information, and the third service information), the V-SMF (or the new V-SMF) may carry the service information included in the first message in the session modification command, and send the session modification command to the UE. In this possible manner, the first message may further include the second indication information, where the second indication information indicates the V-SMF to send the session modification command to the UE.

Optionally, the V-SMF (or the new V-SMF) may determine one or more of the old service information, the new service information, or the third service information. The V-SMF sends the session modification command to the UE based on service information determined by the V-SMF. In this possible manner, the first message may further include the second indication information, where the second indication information indicates the V-SMF (or the new V-SMF) to send the session modification command to the UE after determining one or more of the old service information, the new service information, and the third service information. In this possible manner, it may also be understood that, the first message has an indication function of the second indication information, that is, the first message may be specifically the second indication information.

In the foregoing technical solutions, the H-SMF may determine an EAS corresponding to the service information that needs to be changed, and indicate the EAS to the V-SMF (or the new V-SMF). Alternatively, the H-SMF may indicate the V-SMF (or the new V-SMF) to send the session modification command. Further, the V-SMF (or the new V-SMF) determines an EAS corresponding to the service information that needs to be changed, and sends the session modification command.

In a possible implementation, the H-SMF may further send the second message to a home edge application server discovery network element (home edge application server discovery function, H-EASDF) based on that the DNAI changes. The second message indicates to update a domain name system (domain name system, DNS) handling rule (handling rule) in the H-EASDF. The DNS handling rule may be used by the H-EASDF to process a DNS message, and may also be referred to as a DNS message handling rule. Correspondingly, the H-EASDF updates the DNS handling rule in the H-EASDF based on the second message from the H-SMF. For example, the second message may include an ECS option (EDNS-client-subnet option). In this way, the DNS handling rule in the H-EASDF is updated; and when the UE sends a DNS query to the H-EASDF again, the H-EASDF may return, to the UE, an EAS that is close to the UE.

According to a second aspect, this application provides a communications method in a roaming scenario. The method includes: A V-SMF receives a first message from an H-SMF, where the V-SMF is a V-SMF that provides a service for UE after a DNAI corresponding to a UE location changes; and the V-SMF sends, in response to the first message, a session modification command to the UE, where the session modification command indicates the UE to re-query an EAS. Correspondingly, after receiving the session modification command, the UE re-queries the EAS based on the session modification command.

In a possible implementation, that the V-SMF sends, in response to the first message, a session modification command to the UE may be specifically: The V-SMF sends the session modification command to the UE based on the first message after receiving the first message. Optionally, the first message is determined based on that the DNAI corresponding to the UE location changes.

In a possible implementation, before that a V-SMF receives a first message from an H-SMF, the method further includes: The V-SMF sends, to the H-SMF, one or more of the following: a first DNAI, first service information corresponding to the first DNAI, a second DNAI, second service information corresponding to the second DNAI, and first indication information, where the first DNAI is a DNAI used before the DNAI corresponding to the UE location changes, and the second DNAI is a DNAI obtained after the DNAI corresponding to the UE location changes; the first indication information indicates that the DNAI corresponding to the UE location changes.

The first DNAI is a DNAI used before the DNAI corresponding to the UE location changes. Alternatively, it is understood that a location (or referred to as an old location or an old location) used before UE's movement corresponds to the first DNAI (or referred to as an old DNAI or an old DNAI).

The first service information (or referred to as old service information or old service information) corresponding to the first DNAI may be specifically service information corresponding to the old DNAI in EC deployment information of a V-PLMN.

The second DNAI is a DNAI obtained after the DNAI corresponding to the UE location changes. Alternatively, it is understood that a location (or referred to as a new location or a new location) obtained after the UE's movement corresponds to the second DNAI (or referred to as a new DNAI or a new DNAI).

The second service information (or referred to as new service information or new service information) corresponding to the second DNAI may be specifically service information corresponding to the new DNAI in the EC deployment information of the V-PLMN.

The service information may specifically include an FQDN and/or an EAS IP.

In a possible implementation, the first message includes one or more of the following: the old service information, the new service information, third service information, and second indication information, where the third service information is determined based on the old service information and the new service information, and the second indication information indicates the V-SMF to send the session modification command to the UE. The old service information is service information corresponding to an old DNAI in the EC deployment information of the V-PLMN, where the old DNAI is a DNAI used before the DNAI corresponding to the UE location changes. The new service information is service information corresponding to a new DNAI in the EC deployment information of the V-PLMN, where the new DNAI is a DNAI obtained after the DNAI corresponding to the UE location changes.

In a possible implementation, the V-SMF may further send a context request to a first network element; and the V-SMF receives a context response from the first network element. Optionally, the context response includes the old service information, where the old service information is service information corresponding to the old DNAI, and the old DNAI is a DNAI used before the DNAI corresponding to the UE location changes.

When the first network element is the H-SMF, the context request is a PDU session context request, and the context response is a PDU session context response; or the context request is a PDU session create request, and the context response is a PDU session create response; or the context request is a PDU session update request, and the context response is a PDU session update response.

When the first network element is another V-SMF that provides a service for the UE before the DNAI corresponding to the UE location changes, the context request is a session context request, and the context response is a session context response.

In a possible implementation, that the V-SMF sends the session modification command to the UE based on the first message may be specifically: The V-SMF determines, based on the first message, that the DNAI corresponding to the location of the UE location changes; and the V-SMF sends the session modification command to the UE based on that the DNAI corresponding to the UE location changes.

In a possible implementation, the session modification command includes one of the following: the old service information, where the old service information corresponds to an old service (which may also be understood as: The old service may be identified by the old service information), and the old service information indicates the UE to re-query an EAS that provides the old service; the new service information, where the new service information corresponds to a new service (which may also be understood as: The new service may be identified by the new service information), and the new service information indicates the UE to re-query an EAS that provides the new service; and the third service information, where the third service information is determined based on the old service information and the new service information, the third service information corresponds to a third service (it may also be understood as: The third service may be identified by the third service information), and the third service information indicates the UE to re-query an EAS that provides the third service. Correspondingly, after receiving the session modification command, the UE may re-query the EAS based on one or more of the old service information, the new service information, and the third service information that are in the session modification command.

According to a third aspect, this application provides a communications method in a roaming scenario. The method includes: A V-SMF determines that a DNAI corresponding to a UE location changes, where the V-SMF is a V-SMF that provides a service for UE after the DNAI corresponding to the UE location changes; and the V-SMF sends a session modification command to the UE based on that the DNAI corresponding to the UE location changes, where the session modification command indicates the UE to re-query an EAS. Correspondingly, after receiving the session modification command, the UE re-queries the EAS based on the session modification command.

In a possible implementation, the session modification command includes one of the following: first service information, where the first service information corresponds to a first service, and the first service information indicates the UE to re-query an EAS that provides the first service; second service information, where the second service information corresponds to a second service, and the second service information indicates the UE to re-query an EAS that provides a second service; and third service information, where the third service information is determined based on the first service information and the second service information, the third service information corresponds to a third service, and the third service information indicates the UE to re-query an EAS that provides the third service.

In a possible implementation, after determining that the DNAI corresponding to the UE location changes, the V-SMF may further send, to the H-SMF, one or more of the following: a first DNAI, the first service information corresponding to the first DNAI, a second DNAI, the second service information corresponding to the second DNAI, and first indication information, where the first DNAI is a DNAI used before the DNAI corresponding to the UE location changes, and the second DNAI is a DNAI obtained after the DNAI corresponding to the UE location changes. The first indication information indicates that the DNAI corresponding to the UE location changes. Correspondingly, after receiving the foregoing information from the V-SMF, the H-SMF sends a first message to the V-SMF. The first message may be specifically a response.

In a possible implementation, the V-SMF may further send an ECS option to the H-SMF based on that the DNAI changes. Correspondingly, the H-SMF sends a second message to the V-SMF based on the received ECS option, where the second message indicates to update a DNS handling rule in an H-EASDF, and the DNS handling rule may be used by the H-EASDF to process a DNS message. Correspondingly, the H-EASDF updates the DNS handling rule in the H-EASDF based on the second message from the H-SMF. For example, the second message may include the ECS option. In this way, the DNS handling rule in the H-EASDF is updated; and when the UE sends a DNS query to the H-EASDF again, the H-EASDF may return, to the UE, an EAS that is close to the UE.

According to a fourth aspect, embodiments of this application provide a communications apparatus. The apparatus has the method for implementing the first aspect or any one of the possible implementations of the first aspect. The apparatus may be specifically an H-SMF.

The apparatus has a function of implementing the method in the second aspect or any one of the possible implementations of the second aspect, or the method in the third aspect or any one of the possible implementations of the third aspect. The apparatus may be specifically a V-SMF. The V-SMF is specifically a V-SMF that provides a service for UE after a DNAI corresponding to a UE location changes.

A function of the foregoing communications apparatus may be implemented by hardware, or may be implemented by hardware executing corresponding software. The hardware or the software includes one or more modules, units, or means (means) corresponding to the foregoing function.

In a possible implementation, a structure of the apparatus includes a processing module and a transceiver module. The processing module is configured to support the apparatus in performing a corresponding function of the H-SMF in the first aspect or any one of the implementations of the first aspect, or performing a corresponding function of the V-SMF in the second aspect or any one of the implementations of the second aspect, or performing a corresponding function of the V-SMF in the third aspect or any one of the implementations of the third aspect. The transceiver module is configured to support communication between the apparatus and another communications device. For example, when the apparatus is the H-SMF, the apparatus may send a first message to the V-SMF. The communications apparatus may further include a storage module. The storage module is coupled to the processing module, and stores program instructions and data that are necessary for the apparatus. In an example, the processing module may be a processor, the communications module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus performs the method in the first aspect or any one of the possible implementations of the first aspect, or performs the method in the second aspect or any one of the possible implementations of the second aspect, or performs the method in the third aspect or any one of the possible implementations of the third aspect. Optionally, the apparatus further includes a communications interface, and the processor is coupled to the communications interface. The communications interface may be a transceiver or an input/output interface, or the communications interface may be an input/output interface of a chip. Optionally, the transceiver may be a transceiver circuit, and the input/output interface may be an input/output circuit.

According to a fifth aspect, embodiments of this application provide a chip system, including a processor, where the processor is coupled to a memory. The memory is configured to store a program or instructions, and when the program or the instructions are executed by the processor, the chip system is enabled to implement the method in the first aspect or in any one of the possible implementations of the first aspect, or implement the method in the second aspect or in any one of the possible implementations of the second aspect, or implement the method in the third aspect or in any one of the possible implementations of the third aspect.

Optionally, the chip system further includes an interface circuit, where the interface circuit is configured to exchange code instructions to the processor.

Optionally, there may be one or more processors in the chip system, and the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory.

Optionally, there may be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a sixth aspect, embodiments of this application provide a computer-readable storage medium. The computer-readable storage medium stores a computer program or instructions. When the computer program or the instructions are executed, a computer is enabled to perform the method in the first aspect or in any one of the possible implementations of the first aspect, or perform the method in the second aspect or in any one of the possible implementations of the second aspect, or perform the method in the third aspect or in any one of the possible implementations of the third aspect.

According to a seventh aspect, embodiments of this application provide a computer program product. When a computer reads and executes the computer program product, the computer is enabled to perform the method in the first aspect or in any one of the possible implementations of the first aspect, or perform the method in the second aspect or in any one of the possible implementations of the second aspect, or perform the method in the third aspect or in any one of the possible implementations of the third aspect.

According to an eighth aspect, embodiments of this application provide a communications system. The communications system includes one or more of the following: an H-SMF, a V-SMF, an H-EASDF, or UE. The H-SMF may be configured to perform the related method of the H-SMF in the first aspect or in any one of the possible implementations of the first aspect, the V-SMF may be configured to perform the related method of the V-SMF in the second aspect or in any one of the possible implementations of the second aspect, the H-EASDF is configured to perform the related method of the H-EASDF in the first aspect or in any one of the possible implementations of the first aspect, and the UE is configured to perform the related method of the UE in the second aspect or in any one of the possible implementations of the second aspect.

According to a ninth aspect, embodiments of this application provide a communications system. The communications system includes one or more of the following: an H-SMF, a V-SMF, an H-EASDF, or UE. The H-SMF may be configured to perform the related method of the H-SMF in the third aspect or in any one of the possible implementations of the third aspect, the V-SMF may be configured to perform the related method of the V-SMF in the third aspect or in any one of the possible implementations of the third aspect, the H-EASDF is configured to perform the related method of the H-EASDF in the third aspect or in any one of the possible implementations of the third aspect, and the UE is configured to perform the related method of the UE in the third aspect or in any one of the possible implementations of the third aspect.

For technical solutions that are not described in detail and technical effects that are not described in detail in any one of the second aspect to the ninth aspect, refer to the description in the first aspect. Details are not described herein again.

### BRIEF DESCRIPTION OF DRAWINGS

FIG. 1 is a diagram of an architecture of an HR roaming scenario according to this application;
FIG. 2 is a schematic diagram of an architecture of edge computing according to this application.
FIG. 3 is a schematic diagram of a communications architecture according to this application;
FIG. 4 is a flowchart of a communications method in a roaming scenario according to this application;
FIG. 5 to FIG. 13 are flowcharts of communications methods in specific scenarios according to this application;
FIG. 14 is a flowchart of a communications method in another roaming scenario according to this application;
FIG. 15 is a diagram of a structure of a communications apparatus in a roaming scenario according to this application; and
FIG. 16 is a =diagram of a structure of a communications apparatus in another roaming scenario according to this application.

### DESCRIPTION OF EMBODIMENTS

The following clearly and completely describes the technical solutions in embodiments of this application with reference to the accompanying drawings in the embodiments of this application. It is clear that the described embodiments are merely a part rather than all of the embodiments of this application. In the specification, claims, and accompanying drawings of this application, the terms "first", "second", corresponding term numbers, and the like are used for distinguishing between similar objects but do not necessarily indicate a specific order or sequence. It should be understood that the terms used in such a way are interchangeable in a proper circumstance, and this is merely a distinguishing manner used for describing objects with a same attribute in embodiments of this application. In addition, the terms "include", "contain" and any other variants mean to cover the non-exclusive inclusion, so that a process, method, system, product, or device that includes a list of units is not necessarily limited to those units, but may include other units not expressly listed or inherent to such a process, a method, a product, or a device.

In descriptions of this application, unless otherwise specified, "/" means "or". For example, A/B may represent A or B. "and/or" in this application describes only an association relationship for describing associated objects and represents that three relationships may exist. For example, A and/or B may represent the following three cases: Only A exists, both A and B exist, and only B exists. In addition, in the descriptions of this application, "at least one" means one or more, and "a plurality of" means two or more. "At least one of the following" or a similar expression thereof refers to any combination of these items, including any combination of a single item (items) or a plurality of items (items). For example, at least one of a, b, or c may represent: a, b, c, a and b, a and c, b and c, or a, b and c, where a, b, c may be single or may be plural.

The technical solutions provided in embodiments of this application may be applied to various communications systems. For example, the solutions may be applicable to a 5G system, or may be applicable to another future-oriented new system (for example, a 6G system) or the like. This is not specifically limited in embodiments of this application. In addition, the terms "system" and "network" may be replaced with each other.

For ease of understanding embodiments of this application, an architecture or a concept in embodiments of this application is briefly described.

### 1. Roaming and roaming architecture

In a country or a region, a cellular mobile communications network of a standard of an operator is referred to as a PLMN. A PLMN to which UE subscribes is referred to as an H-PLMN, and represents a home operator of a subscriber. When UE leaves coverage of the H-PLMN due to movement or another reason, and if a specific PLMN meets the following condition (1) and condition (2), the UE may access the PLMN and the PLMN is referred to as a V-PLMN.

Condition (1): The PLMN may cover a current UE location. Condition (2): An operator of the PLMN signs a roaming agreement with an operator of the H-PLMN of the UE. The roaming agreement may be considered as a business agreement between the operators, and includes but is not limited to concerns such as a service provided for a subscriber of a peer operator's network and a charging manner.

A process in which the UE accesses the V-PLMN may be referred to as roaming. Based on whether a user plane of the UE is terminated by the V-PLMN or by the H-PLMN, the roaming scenario may be classified into local breakout (local breakout, LBO) roaming and home routed (home routed, HR) roaming.

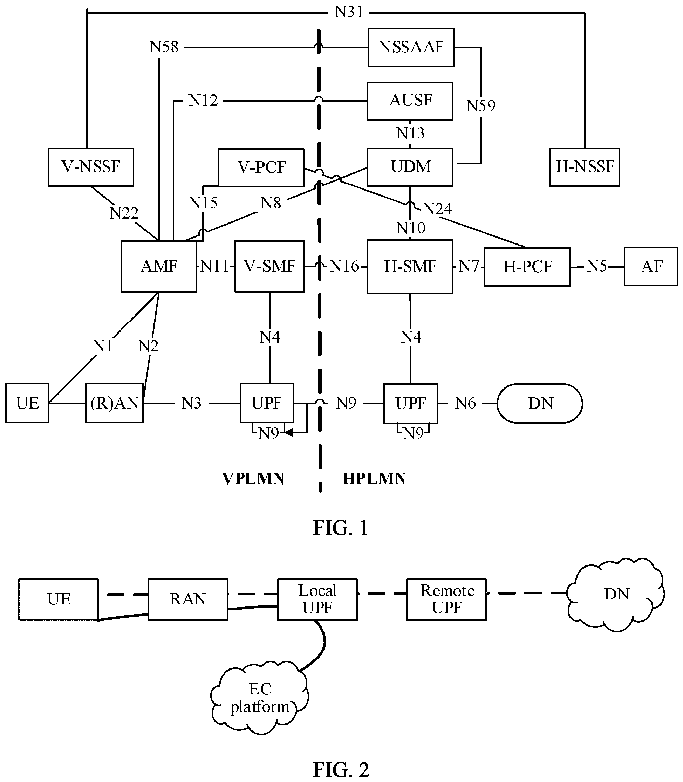

FIG. 1 is a diagram of an architecture of an HR roaming scenario. The following briefly describes functions of involved devices/network elements.

A terminal may also be referred to as a terminal device, user equipment (user equipment, UE), a mobile station, a mobile terminal, or the like. The terminal may be widely applied to various scenarios, for example, device-to-device (device-to-device, D2D), vehicle to everything (vehicle to everything, V2X) communications, machine-type communications (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form used by the terminal are not limited in embodiments of this application.

An access network (access network, AN) device or a radio access network (radio access network, RAN) device is deployed near a terminal device, provides a network access function for an authorized user in a specific area, and can determine transmission tunnels of different quality based on a user level, a service requirement, and the like to perform user data transmission. The RAN may provide an access service for the terminal device as required, and is responsible for forwarding a control signal and user data between the terminal device and a core network.

A data network (data network, DN) provides services for users. Generally, a client is located on a terminal device, and a server is located on the data network. The data network may be a private network, for example, a local area network, or an external network that is not controlled by an operator, for example, the Internet (Internet), or a dedicated network jointly deployed by operators, for example, a network that provides an IP multimedia network subsystem (IP multimedia core network subsystem, IMS) service.

A user plane of the core network includes a user plane function. A control plane of the core network includes an access and mobility management function, a session management function, a unified data management, a policy control function, an application function, an authentication server function, a network slice selection function, and an authentication and authorization function for network slice selection.

The following briefly describes functions of functional entities in the core network.
1. A session management network element is mainly responsible for session management in a mobile network, for example, session establishment, modification, and release. Specific functions include assigning IP addresses to users and selecting UPFs for packet forwarding. In 5G communications, the session management network element may be a session management function (session management function, SMF) network element. In future communications such as 6G communications, the session management function network element may still be an SMF network element or have another name. This is not limited in this application.
2. An access management network element is mainly responsible for mobility management in a mobile network, for example, user location update, user registration with a network, and user handover. For example, the access management network element may be an access and mobility management function (access and mobility management function, AMF) network element in a 5G network. In future communications such as 6G communications, the access management network element may still be an AMF network element or have another name. This is not limited in this application.
3. A policy control network element is a unified policy framework for guiding network behavior, and provides policy rule information and the like for a control plane function network element (for example, an AMF or an SMF). In 5G communications, the policy control network element may be a policy control function (policy control function, PCF) network element. In future communications such as 6G communications, the policy control network element may still be a PCF network element or have another name. This is not limited in this application.
4. A data management network element is configured to process a user identity, subscription, access authentication, registration, mobility management, or the like. In 5G communications, the network element may be specifically a unified data management (unified data management, UDM) network element. In future communications such as 6G communications, the network element may still be a UDM network element or may another name. This is not limited in this application.
5. An application network element is configured to perform application-affected data routing, an access network exposure function, or interaction with a policy framework for policy control. In 5G communications, the application network element may be an application function (application function, AF) network element. In future communications such as 6G communications, the application network element may still be an AF network element or have another name. This is not limited in this application.
6. A user plane network element is configured to route and forward a packet, or is configured to process a quality of service (quality of service, QoS) of user plane data, or the like. In 5G communications, the user plane network element may be a user plane function (user plane function, UPF) network element. In future communications such as 6G communications, the user plane network element may still be a UPF network element or have another name. This is not limited in this application.
7. An authentication service network element is mainly used for user authentication and the like. In 5G communications, the authentication service network element may be an authentication server function (authentication server function, AUSF) network element. In future communications such as 6G communications, the authentication service network element may still be an AUSF network element or have another name. This is not limited in this application.
8. A network slice selection function network element is configured to select a network slice for UE. In 5G communications, the network slice selection function network element may be a network slice selection function (network slice selection function, NSSF) network element. In future communications such as 6G communications, the network slice selection function network element may still be an NSSF network element or have another name. This is not limited in this application.
9. A network slice-specific authentication and authorization function network element is configured to perform slice authentication for UE. In 5G communications, the network slice-specific authentication and authorization function network element may be specifically the network slice-specific authentication and authorization function (network slice-specific authentication and authorization function, NSSAAF) network element. In future communications such as 6G communications, the network slice-specific authentication and authorization function network element may still be an NSSAAF network element or have another name. This is not limited in this application.

It may be understood that, in the HR roaming scenario, an H-SMF, an H-PCF, and an H-NSSF are respectively a home (home) SMF, a home PCF, and a home NSSF. A V-SMF, a V-PCF, and a V-NSSF are respectively a visited (visit) SMF, a visited PCF, and a visited NSSF.

### 2. Edge computing (edge computing, EC) and edge computing architecture

In an architecture and deployment of 4G and previous conventional mobile networks, a user plane device is basically deployed in a tree topology. An uplink user packet passes through a base station and a backhaul network, and finally accesses a data network through anchor gateways that are deployed in a centralized manner. The anchor gateways are usually deployed at a high position in a network, for example, a central equipment room in a geographic region. The topology structure is simple, which facilitates centralized service management and control and packet processing at an anchor point for an operator. However, with the explosive growth of mobile service traffic, it becomes increasingly difficult to support the rapidly growing mobile service traffic model in such a deployment manner. In the network in which the anchor gateways are deployed in the centralized manner, increased traffic is finally concentrated in a gateway and a core equipment room, which imposes increasingly high requirements on backhaul network bandwidth, an equipment room throughput, and a gateway specification. In addition, a long-distance backhaul network from an access point to an anchor gateway and a complex transmission environment also cause a large delay and jitter for user packet transmission.

Therefore, the industry proposes a concept of edge computing (edge computing, EC). FIG. 2 is a schematic diagram of an architecture of edge computing. An EC platform (that is, an EC service) may be deployed at a sinking UPF (that is, a local UPF). A DN (or referred to as a central data network (central data network, CDN)) is deployed at a remote UPF. Compared with a path (a dashed line in FIG. 2) for UE to access the central data network, a path (a solid line in FIG. 2) for the UE to access the EC platform is greatly shortened. Therefore, the edge computing technology implements local processing of distributed service traffic, avoids excessive traffic concentration, and greatly reduces specification requirements for a core equipment room and a centralized gateway. In addition, a distance of a backhaul network is shortened, and an end-to-end (end to end, E2E) delay and jitter of a user packet are reduced, so that deployment of an ultra-low-latency service becomes possible.

Further, in FIG. 2, the EC platform corresponds to a local data network (local data network, LDN), and a user plane connection for accessing the EC platform may be represented by using a data network access point identifier (data network access identifier, DNAI). It may be understood that the EC platform is a local data center (a geographical location concept) and may include a plurality of local data networks. The local data network refers to a data network that is close to a user location.

An EAS may be deployed on the EC platform. The EAS may be specifically an instance (instance) of a server application program (for example, social media software, augmented reality (augmented reality, AR), or virtual reality (virtual reality, VR)) that is deployed and run on the EC platform. One or more EASs may be deployed for a single application on one or more EC platforms. EASs deployed and run on different EC platforms may be considered as different EASs for the single application.

### 3. Local traffic steering for V-PLMN

When UE accesses the V-PLMN, some services may support only HR roaming access due to subscription of a DNN and single network slice selection assistance information (single network slice selection assistance information, S-NSSAI). Therefore, if EC access is expected to be used for these applications, local traffic steering needs to be performed on the V-PLMN, that is, services are offloaded to an edge area to implement edge service access.

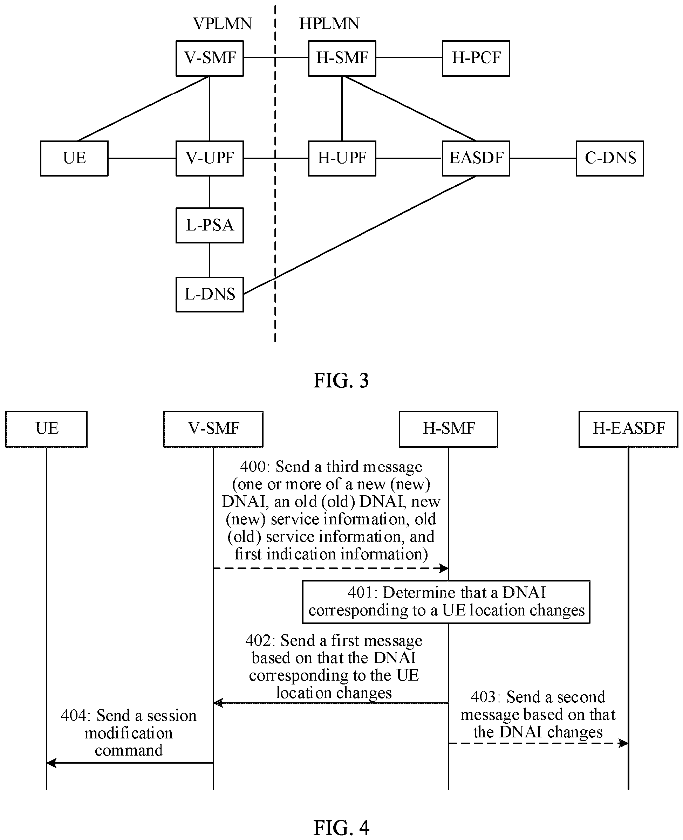

Therefore, FIG. 3 is a schematic diagram of another communications architecture. For descriptions of network elements or devices such as UE, a V-SMF, a V-UPF, a V-PCF, an H-SMF, an H-UPF, and an H-PCF, refer to descriptions in FIG. 1 or FIG. 2. Details are not described herein again.

As shown in FIG. 3, an edge application server discovery network element (edge application server discovery function, EASDF) may be deployed in an H-PLMN, and the EASDF may be specifically an H-EASDF. A main function of the EASDF is to process a DNS message based on instructions of the SMF, and may specifically include: The EASDF adds an ECS option to a DNS query (DNS query), and forwards the DNS query to a DNS server. Correspondingly, the EASDF receives a DNS response (DNS response) from the DNS, and forwards the DNS response to the UE, where the DNS response includes an EAS IP corresponding to an EAS that is close to the UE. The ECS option is sent by the SMF to the EASDF. Optionally, the EASDF reports an FQDN in the DNS query (DNS query) to the SMF, and receives the ECS option returned by the SMF.

The DNS may be considered as a distributed database that maps domain names and IP addresses on the Internet, and enables users to access the Internet more conveniently without remembering the IP address strings that can be directly read by machines. As shown in FIG. 3, a DNS deployed in the V-PLMN is represented as an L-DNS (local DNS), and a DNS deployed in the H-PLMN is represented as a C-DNS (central DNS).

A steering node may be inserted into the V-PLMN in FIG. 3, that is, an uplink classifier (uplink classifier, UL CL) / a branch point (branch point, BP) and a local PDU session anchor (local PDU session anchor, L-PSA) are inserted. The L-PSA may be represented as a V-L-PSA. Therefore, the UE accesses an EC service of the V-PLMN via the V-L-PSA.

Further, inserting the steering node into the V-PLMN may be specifically classified into a static insertion manner and a dynamic insertion manner.

The static insertion manner means that the V-SMF inserts the steering node into the V-PLMN based on authorization information and UE location information (UE location information, ULI). The V-SMF provides the ECS option corresponding to the ULI for the H-SMF, and the H-SMF sends the ECS option corresponding to the ULI to the H-EASDF. In this manner, the ECS option is related only to the ULI. That is, the ECS option can be determined based on only the ULI. Further, the static insertion manner is applicable to a case in which the H-PLMN perceives EC deployment in the V-PLMN, and is applicable to a case in which the H-PLMN does not perceive EC deployment in the V-PLMN.

In the dynamic insertion manner, the UE sends a DNS query to the H-EASDF, where the DNS query includes an FQDN; the H-EASDF reports the FQDN to the H-SMF; the H-SMF sends the FQDN to the V-SMF; and the V-SMF determines a plurality of DNAIs based on the FQDN and EC deployment information (EC deployment information, EC-DI). Then, the V-SMF determines, from the plurality of DNAIs, a target DNAI (target DNAI) based on the ULI; determines, based on the target DNAI, an ECS option corresponding to the target DNAI; and returns the ECS option to the H-SMF. The H-SMF sends the ECS option to the H-EASDF. In this manner, the ECS option is related to both the ULI and service information (to be specific, the FQDN). Further, the dynamic insertion may be applicable to a case in which the H-PLMN perceives EC deployment in the V-PLMN.

An English full name of the ECS option (ECS option) may be EDNS-client-subnet option, and a Chinese full name may be an EDNS client-subnet option. Further, a Chinese full name of the EDNS may be extended mechanisms for DNS, and an English full name may be extended mechanisms for DNS.

The EC deployment information may also be referred to as EAS service deployment information (EAS deployment information, EDI, or EAS-DI). The EC deployment information may include a correspondence between service information and a DNAI, where the service information may be represented by FQDN(s) and/or EAS IP(s).

In the architecture shown in FIG. 2, if a UE location changes, an EAS that provides an EC service for the UE may change accordingly. For example, when the UE is at a location before moving, the UE may access an EAS service a on an EC deployment location 1; and the UE moves from the EC deployment location 1 to an EC deployment location 2. It is assumed that the EAS service a is also deployed at the EC deployment location 2. As for the UE, a path corresponding to accessing the EAS service a by the UE at the EC deployment location 2 is better. It is further assumed that the UE accesses an EAS service b on a central data network before moving, and the EAS service b is deployed at the EC deployment location 2. As for the UE, a path corresponding to accessing the EAS service b by the UE at the EC deployment location 2 is better.

In this way, the SMF may trigger, based on UE's movement, insertion (insert), change (change), or removal (remove) of the steering node. Specifically, the SMF initiates a session modification procedure: The SMF determines, based on the UE's movement, an impact field, and sends a session modification command to the UE, where the session modification command includes an EAS rediscovery indication and the impact field. The EAS rediscovery indication may be represented as an EAS rediscovery indication in English, and indicates the UE to re-initiate a DNS query to the EASDF. The impact field may be represented as an impact field in English, that is, a service for which a DNS query needs to be initiated due to the UE's movement, where the impact field may be represented by FQDN(s) or EAS IP(s).

Further, the SMF may determine the impact field specifically based on the EC deployment information. Specifically, the SMF may determine, from the EC deployment information, the impact field based on a change of a DNAI corresponding to a UE location before the movement and a DNAI corresponding to a UE location after the movement. The following describes how to change, insert, and delete a steering node.

In a scenario of changing a steering node (which may be understood as changing an LDN, changing a DNAI, or changing an L-PSA), the UE moves from an EC deployment location 1 to an EC deployment location 2, where the EC deployment location 1 is represented by a DNAI 1, and the EC deployment location 2 is represented by a DNAI 2. Based on that the DNAI 1 corresponds to FQDNs 1 to 5 in the EC deployment information and that the DNAI 2 corresponds to FQDNs 1 to 10 in the EC deployment information, the impact field may be determined as FQDNs 1 to 10.

In a scenario of inserting a steering node (which may be understood as inserting an LDN, inserting a DNAI, inserting a UL CL/BP and an L-PSA, or inserting an L-PSA), the UE moves from a central data network to an EC deployment location 2, where the EC deployment location 2 is represented by a DNAI 2. Based on that the DNAI 2 corresponds to FQDNs 1 to 10 in the EC deployment information, the impact field is determined as FQDNs 1 to 10.

In a scenario of deleting a steering node (which may be understood as deleting an LDN, deleting a DNAI, deleting a UL CL/BP and an L-PSA, or deleting an L-PSA), the UE moves from an EC deployment location 1 to a central data network, where the EC deployment location 1 is represented by a DNAI 1. Based on that the DNAI 1 corresponds to FQDNs 1 to 5 in the EC deployment information, the impact field is determined as FQDNs 1 to 5.

Further, the SMF may send the session modification command to the UE, where the session modification command includes the EAS rediscovery indication and the impact field. Correspondingly, the UE initiates a DNS query to the EASDF, where the DNS query may include an impact field of the EAS that needs to be rediscovered.

In the architecture shown in FIG. 2, the UE moves in the H-PLMN, and the SMF (that is, the H-SMF) in the H-PLMN may determine the impact field based on the UE's movement and the EC deployment information, to trigger a session modification procedure. However, in the HR roaming scenario shown in FIG. 3, the UE may move in the V-PLMN, move from the H-PLMN to the V-PLMN, move from the V-PLMN to the H-PLMN, or move between V-PLMNs. Correspondingly, an EAS that provides the EC service for the UE may also change accordingly, and the UE also needs to re-query the EAS. However, how to trigger the UE to re-query the EAS is a technical problem that needs to be urgently resolved currently.

According to a communications method in a roaming scenario provided in this application, after an H-SMF determines that a UE location change causes a DNAI corresponding to UE to change, the H-SMF may send a first message to a V-SMF. The first message may indicate the V-SMF to send a session modification command to the UE. Correspondingly, the UE may re-initiate a process of querying the EAS based on the session modification command. For details, refer to an example of a flowchart of a communications method in a roaming scenario shown in FIG. 4.

To describe embodiments of this application more clearly, a UE location, a DNAI, an EC platform, service information, and a steering node in this application are first described. There is a correspondence between a DNAI and an EC platform. A service is deployed on the EC platform. That is, the DNAI also corresponds to the service on the EC platform. The service may be represented by service information (for example, an FQDN and/or an EAS IP). Correspondingly, the DNAI corresponds to the service information (for example, the FQDN and/or the EAS IP). The UE may access, via the steering node (that is, a UL CL/BP and an L-PSA, or an L-PSA), the EC platform corresponding to the DNAI. The SMF may select a steering node based on the UE location and the DNAI. For example, the SMF may determine, based on the UE location, a DNAI accessed by the UE, and select the steering node based on the DNAI accessed by the UE. The selected steering node is used by the UE to access the EC platform corresponding to the DNAI.

Step 401: An H-SMF determines that a DNAI corresponding to the UE location changes.

In this application, UE before movement and UE after movement may respectively correspond to a location before UE's movement and a location after UE's movement. The location before the UE's movement and the location after the UE's movement may be respectively referred to as an old location (or an old location) and a new location (or a new location), location information corresponding to the old location may be referred to as old ULI, and location information corresponding to the new location may be referred to as new ULI.

In this application, based on whether the UE at the old location corresponds to a DNAI and whether the UE at the new location corresponds to a DNAI, that the DNAI changes may include the following three cases:

Case 1: An old DNAI changes to a new DNAI.

When the UE is at the old location, the UE corresponds to the old DNAI (or referred to as a first DNAI); and when the UE is at the new location, the UE corresponds to the new DNAI (or referred to as a second DNAI). That the DNAI corresponding to the UE location changes is specifically: the old DNAI changes to the new DNAI.

Case 2: An old DNAI is deleted.

When the UE is at the old location, the UE corresponds to the old DNAI (or referred to as a first DNAI); and when the UE is at the new location, the UE does not correspond to a new DNAI (or referred to as a second DNAI), that is, the UE does not have a corresponding EC platform after movement, that is, the UE accesses no EC service after the movement. That the DNAI corresponding to the UE location changes is specifically: the old DNAI is deleted.

Case 3: A new DNAI is inserted.

When the UE is at the old location, the UE does not correspond to an old DNAI (or referred to as a first DNAI), that is, the UE does not correspond to a corresponding EC platform before movement; and when the UE is at the new location, the UE corresponds to the new DNAI (or referred to as a second DNAI). That the DNAI corresponding to the UE location changes is specifically inserting the new DNAI.

Optionally, before the H-SMF determines that the DNAI corresponding to the UE location changes, step 400 may further be as follows.

Step 400: A V-SMF sends a third message to the H-SMF.

The third message may include one or more of the following: the new DNAI, new service information corresponding to the new DNAI, the old DNAI, old service information corresponding to the old DNAI, and first indication information.

Optionally, the V-SMF may be specifically a V-SMF that serves the UE after the DNAI corresponding to the UE location changes. Specifically, the V-SMF obtains new ULI corresponding to the UE that is at the new location, determines the new DNAI based on the new ULI, and sends the third message to the H-SMF. Specifically, the V-SMF determines the DNAI change corresponding to the UE location, and sends the third message to the H-SMF after determining that the DNAI corresponding to the UE location changes. Correspondingly, after receiving the third message from the V-SMF, the H-SMF determines that the DNAI corresponding to the UE location changes.

In an actual application, the third message may be a PDU session update request (PDU session update request). Correspondingly, after receiving the PDU session update request from the V-SMF, the H-SMF triggers a PDU session modification procedure based on the PDU session update request.

The old service information corresponding to the old DNAI may also be referred to as first service information corresponding to the first DNAI, and the new service information corresponding to the new DNAI may also be referred to as second service information corresponding to the second DNAI.

The new service information corresponding to the new DNAI may be specifically a new FQDN and/or a new EAS IP. The old service information corresponding to the old DNAI may be specifically an old FQDN and/or an old EAS IP.

The first indication information may indicate that the DNAI corresponding to the UE location changes. For example, when the H-SMF receives the first indication information, it may be considered that the DNAI corresponding to the UE location changes. When the H-SMF does not receive the first indication information, it may be considered that the DNAI corresponding to the UE location does not change.

Alternatively, a specific value of the first indication information may be used for indicating whether the DNAI corresponding to the UE location changes. For example, the first indication information may occupy 1 bit. When a value of the 1 bit is 1, it indicates that the DNAI corresponding to the UE location changes. When a value of the 1 bit is 0, it indicates that the DNAI corresponding to the UE location does not change. Correspondingly, after receiving the first indication information, the H-SMF may determine, based on the specific value of the first indication information, whether the DNAI corresponding to the UE location changes.

To clearly explain embodiments of this application, the following separately describes step 400 by using case 1 to case 3.

Case 1: The old DNAI changes to the new DNAI.

The third message sent by the V-SMF to the H-SMF includes one or more of the following: the new DNAI, the new service information corresponding to the new DNAI, the old DNAI, the old service information corresponding to the old DNAI, and the first indication information.

Further, based on which SMF (the V-SMF, a new V-SMF, or the H-SMF) provides a service for the UE when the UE is at the old location and at the new location, the following uses example 1 to example 3 for description.

Example 1: The UE may be served by a same V-SMF when the UE is at the old location and at the new location.

It is understood that the V-SMF changes, in a V-PLMN, a steering node for the UE. Specifically, the old DNAI is a location at which the V-SMF inserts the steering node for the UE when the UE is at the old location, and the new DNAI is a location at which the same V-SMF inserts the steering node for the UE when the UE is at a new location.

Specifically, the third message sent by the V-SMF to the H-SMF may include the old DNAI and the new DNAI.

The V-SMF records EC deployment information of the V-PLMN. Optionally, the V-SMF may further obtain old service information based on the old DNAI and the EC deployment information of the V-PLMN. In addition, the V-SMF may obtain the new service information based on the new DNAI and the EC deployment information of the V-PLMN. The third message sent by the V-SMF to the H-SMF includes the new DNAI, the new service information, the old DNAI, and the old service information.

In addition, after determining the new service information and the old service information, the V-SMF may alternatively send, to the H-SMF, a third message including the new service information and the old service information (that is, the third message may not include the old DNAI and the new DNAI).

Example 2: The UE may be separately served by different V-SMFs when the UE is at the old location and at the new location.

A V-SMF that serves the UE that is at the old location may be referred to as an old V-SMF, and a V-SMF that serves the UE that is at the new location may be referred to as a new V-SMF. In other words, the old DNAI is a location at which the old V-SMF inserts the steering node when the UE is at the old location, and the new DNAI is a location at which the new V-SMF inserts the steering node when the UE is at the new location. In this case, the SMF that sends the third message to the H-SMF in step 400 is the new V-SMF.

Specifically, the third message sent by the new V-SMF to the H-SMF includes the new DNAI. Further, the new V-SMF records the EC deployment information of the V-PLMN, and the new V-SMF may obtain new service information based on the new DNAI and the EC deployment information of the V-PLMN. Correspondingly, the third message sent by the new V-SMF to the H-SMF includes the new DNAI and the new service information. Alternatively, after determining the new service information, the new V-SMF may send, to the H-SMF, a third message including the new service information (that is, the third message may not include the new DNAI).

Optionally, the new V-SMF may further obtain the old DNAI and/or the old service information from the old V-SMF. Correspondingly, the third message sent by the new V-SMF to the H-SMF may further include the old DNAI and/or the old service information.

In a specific implementation, the new V-SMF may send a context request to the old V-SMF, and correspondingly, the old V-SMF sends a context response to the new V-SMF. The context response may include the old DNAI and/or the old service information. Further, when the context response includes the old DNAI, the new V-SMF may further obtain the old service information based on the old DNAI and the EC deployment information of the V-PLMN.

Further, the context response may further include authorization information, and the authorization information indicates that V-PLMN traffic steering is allowed. Correspondingly, after obtaining the authorization information, the new V-SMF may establish a steering node in the V-PLMN.

The context request may be specifically a PDU session context request (PDU session context request), and the context response may be specifically a PDU session context response (PDU session context response).

In addition, the new V-SMF may alternatively send a third message to the H-SMF, where the third message includes the new DNAI and/or the new service information. For example, after a UE location changes, the new V-SMF sends the new DNAI and/or the new service information to the H-SMF. In addition, the old V-SMF sends a fourth message to the H-SMF, where the fourth message includes the old DNAI and/or the old service information. For example, before the UE location changes, the old V-SMF sends the old DNAI and/or the old service information to the H-SMF.

Example 3: The UE may be separately served by the H-SMF and the V-SMF when the UE is at the old location and at the new location.

The old DNAI is a location at which the H-SMF inserts the steering node when the UE is at the old location, and the new DNAI is a location at which the V-SMF inserts the steering node when the UE is at the new location.

The V-SMF sends the third message to the H-SMF, where the third message may include the new DNAI and/or the new service information. For details, refer to the description in example 1 or example 2. Correspondingly, the H-SMF may obtain the new DNAI and/or the new service information from the third message.

In addition, the old DNAI is a location at which the H-SMF inserts the steering node when the UE is at the old location. Therefore, the H-SMF may further obtain the old DNAI and/or the old service information.

As described above, the H-SMF may obtain the new DNAI and the old DNAI, or the H-SMF may obtain the new DNAI, the new service information, the old DNAI, and the old service information, or the H-SMF may obtain the new service information and the old service information. The H-SMF may further determine that UE's movement causes the DNAI corresponding to the UE location to change.

In addition, the V-SMF may alternatively send, to the H-SMF, a third message including the first indication information, where the first indication information indicates that the DNAI corresponding to the UE location changes.

In the foregoing example 1, the third message sent by the V-SMF to the H-SMF may not only include the first indication information, but also include one or more of the old DNAI, the old service information, the new DNAI, and the new service information.

In addition, when the V-SMF sends, to the H-SMF, more of the new DNAI, the new service information corresponding to the new DNAI, the old DNAI, the old service information corresponding to the old DNAI, and the first indication information, the V-SMF may specifically send to the H-SMF by using one third message, or the V-SMF may send to the H-SMF by using a plurality of third messages.

For example, before the UE location changes, the V-SMF sends, to the H-SMF by using the third message, at least one of the following: the old DNAI and old service information corresponding to the old DNAI. After the UE location changes, the V-SMF sends, to the H-SMF by using the third message, at least one of the following: the new DNAI, the new service information corresponding to the new DNAI, and the first indication information. In this case, it may be understood that, the V-SMF may send the third message to the H-SMF before and after the UE location changes.

In the foregoing example 2, the third message sent by the new V-SMF to the H-SMF may not only include the first indication information, but also include one or more of the old DNAI, the old service information, the new DNAI, and the new service information. Certainly, the old V-SMF may send the fourth message to the H-SMF. The fourth message not only includes the first indication information, but also may include one or more of the old DNAI and the old service information.

For example, before the UE location changes, the old V-SMF sends, to the H-SMF by using the fourth message, at least one of the following: the old DNAI and the old DNAI. After the UE location changes, the new V-SMF sends, to the H-SMF by using the third message, at least one of the following: the new DNAI, the new service information, and the first indication information.

In the foregoing example 3, the third message sent by the V-SMF to the H-SMF may not only include the first indication information, but also include one or more of the new DNAI and the new service information. In other words, after the UE location changes, the V-SMF sends, to the H-SMF by using the third message, at least one of the following: the new DNAI, the new service information, and the first indication information.

Case 2: An old DNAI is deleted.

The third message sent by the V-SMF to the H-SMF includes one or more of the following: the old DNAI, the old service information corresponding to the old DNAI, and the first indication information. For descriptions of the old DNAI, the old service information corresponding to the old DNAI, and the first indication information, refer to the description of the foregoing case 1.

Further, based on which SMF (the V-SMF, a new V-SMF, or the H-SMF) provides a service for the UE when the UE is at the old location and at the new location, the following uses examples A to C for description.

Example A: The UE may be served by a same V-SMF when the UE is at the old location and at the new location.

It is understood that the old DNAI is a location at which the V-SMF inserts the steering node when the UE is at the old location, and the V-SMF does not insert the steering node when the UE is at the new location.

For example, the third message sent by the V-SMF to the H-SMF includes the old DNAI, or includes the old service information, or includes the old DNAI and the old service information. For details, refer to the description of the old DNAI and/or the old service information in example 1 of the foregoing case 1.

It may be understood that, for the old DNAI and/or the old service information, the V-SMF may send the old DNAI and/or the old service information to the H-SMF before the UE location changes. In this way, after the UE location changes, the third message sent by the V-SMF to the H-SMF may not include the old DNAI and/or the old service information.

Example B: The UE is separately served by different V-SMFs when the UE is at the old location and at the new location.

In other words, the old DNAI is a location at which the old V-SMF inserts the steering node when the UE is at the old location, and the new V-SMF does not insert the steering node when the UE is at the new location.

For example, a fourth message sent by the old V-SMF to the H-SMF includes the old DNAI. Further, the old V-SMF records EC deployment information of the V-PLMN, and the old V-SMF may obtain old service information based on the old DNAI and the EC deployment information of the V-PLMN. The fourth message sent by the old V-SMF to the H-SMF includes the old DNAI and the old service information. Alternatively, after determining the old service information, the old V-SMF may send, to the H-SMF, a fourth message including the old service information (that is, the fourth message does not include the old DNAI). It may be understood that, for the old DNAI and/or the old service information, the old V-SMF may send the old DNAI and/or the old service information to the H-SMF before the UE location changes.

For another example, the new V-SMF may first request the old V-SMF for the old DNAI and/or the old service information, and then send, to the H-SMF, the third message including the old DNAI and/or the old service information. For details about an implementation in which the new V-SMF requests the old V-SMF for the old DNAI and/or the old service information, refer to the description about the old DNAI and/or the old service information in example 1 of the foregoing case 1.

As described above, the H-SMF may obtain the old DNAI, or the old DNAI and the old service information, or the old service information. The H-SMF further determines that UE's movement causes the DNAI corresponding to the UE location to change.

In addition, the V-SMF may alternatively send, to the H-SMF, a third message including the first indication information, where the first indication information indicates that the DNAI corresponding to the UE location changes.

In the foregoing example A, the third message sent by the V-SMF to the H-SMF may not only include the first indication information, but also include one or more of old DNAI and old service information.

In the foregoing example B, the third message sent by the new V-SMF to the H-SMF may not only include the first indication information, but also include one or more of old DNAI and old service information. Certainly, the old V-SMF may send one or more of the old DNAI or the old service information to the H-SMF.

In addition, the V-SMF or the new V-SMF may alternatively send, to the H-SMF, a third message including a new special DNAI and/or new special service information, to indicate that the UE does not correspond to the new DNAI and/or the new service information when the UE is at the new location. It may be considered that the new special DNAI and/or the new special service information are/is a representation form of the first indication information. When the H-SMF receives the new special DNAI and/or the new special service information, the H-SMF determines that the DNAI corresponding to the UE location changes.

The new special DNAI may indicate that the DNAI corresponding to the UE location changes, or indicate that the UE does not correspond to the new DNAI when the UE is at the new location. The new special DNAI may be understood as a specific (or preset) character string corresponding to the DNAI. For example, the new special DNAI is represented as a character string "aaaaa".

The new special service information may indicate that the DNAI corresponding to the UE location changes, or indicate that the UE does not access the EC service when the UE is at the new location. Further, the service information is represented by an FQDN or an (EAS) IP. In this case, the new special service information may be understood as a specific (or preset) character string corresponding to a domain name, for example, represented as "www.aaa.com", or the new special service information may be understood as a specific (or preset) value corresponding to the IP, for example, represented as "1.1.1.1".

It may be understood that, the foregoing is merely a specific example of the new special DNAI and the new special service information. In this application, the new special DNAI and the new special service information may alternatively be in another form. This is not limited in this application. In addition, the third message may alternatively include no DNAI and/or service information. It is understood that the third message includes a specific information element (information element, IE), and a value of the IE may be null (that is, null). The IE whose value is null is also a representation form of the first indication information.

In addition, the description is also applicable to the following old special DNAI and old special service information. The old special DNAI may indicate that the DNAI corresponding to the UE location changes, or indicate that the UE does not correspond to the old DNAI when the UE is at the old location. The old special DNAI may also be understood as a specific (or preset) character string corresponding to the DNAI. The old special service information may indicate that the DNAI corresponding to the UE location changes, or indicate that the UE does not access the EC service when the UE is at the old location. The old special service information may also be understood as a specific (or preset) character string corresponding to a domain name or a specific (or preset) value corresponding to an IP. This is not described herein again.

In the foregoing example A, the third message sent by the V-SMF to the H-SMF may include not only the new special DNAI and/or the new special service information, but also the old DNAI and/or the old service information. In the foregoing example B, a manner in which the new V-SMF sends the third message to the H-SMF is similar, and details are not described again.

In addition, the third message sent by the V-SMF or the new V-SMF to the H-SMF may further include no information. It may be considered that including no information is a representation form of the first indication information. When the H-SMF receives the third message, the H-SMF determines that the DNAI corresponding to the UE location changes. The V-SMF or the old V-SMF may send the old DNAI and/or the old service information to the H-SMF before the UE location changes.

In addition, case 2 may further include example C. Example C may be applicable to a scenario in which the UE is served by the H-SMF when the UE is at the old location and the V-SMF when the UE at the new location. The H-SMF may obtain the old DNAI and/or the old service information without receiving the third message from the V-SMF. Alternatively, the third message sent by the V-SMF to the H-SMF includes the first indication information. Optionally, the first indication information may be specifically the new special DNAI and/or the new special service information. Optionally, the third message does not include any DNAI information. This is also a representation form of the first indication information.

Certainly, there may be another manner in this application, and examples are not enumerated one by one.

Case 3: A new DNAI is inserted.

The third message sent by the V-SMF to the H-SMF includes one or more of the following: the new DNAI, new service information corresponding to the new DNAI, and the first indication information. For descriptions of the new DNAI, the new service information corresponding to the new DNAI, and the first indication information, refer to the descriptions of the foregoing case 1.

Further, based on which SMF (V-SMF, new V-SMF, or H-SMF) provides a service for the UE when the UE is at the old location and at the new location, the following uses examples a to c for description.

Example a: The UE may be served by a same V-SMF when the UE is at the old location and at the new location.

It is understood that the V-SMF does not insert the steering node when the UE is at the old location, that is, the UE has no EC platform that can be accessed before the location changes. The new DNAI is a location at which the same V-SMF inserts the steering node when the UE is at the new location.

Specifically, the third message sent by the V-SMF to the H-SMF includes the new DNAI, or includes the new service information, or includes the new DNAI and the new service information. For details, refer to the description of the new DNAI and/or the new service information in example 1 of the foregoing case 1.

Example b: The UE may be served by different V-SMFs when the UE is at the old location and at the new location.

In other words, the old V-SMF does not insert the steering node when the UE is at the old location, and the new DNAI is a location at which the new V-SMF inserts the steering node when the UE is at the new location.

For example, the third message sent by the new V-SMF to the H-SMF includes the new DNAI, or includes the new service information, or includes the new DNAI and the new service information. For details, refer to the description of the new DNAI and/or the new service information in example 2 of the foregoing case 1.

Example c: The UE may be separately served by the H-SMF and the V-SMF when the UE is at the old location and at the new location.

The H-SMF does not insert the steering node when the UE is at the old location, and the new DNAI is a location at which the V-SMF inserts the steering node when the UE is at the new location.

For example, the third message sent by the V-SMF to the H-SMF includes the new DNAI, or includes the new service information, or includes the new DNAI and the new service information. For details, refer to the description of the new DNAI and/or the new service information in example 3 of the foregoing case 1.

As described above, the H-SMF may obtain the new DNAI, or the new DNAI and the new service information, or the new service information. The H-SMF may further determine that UE's movement causes the DNAI corresponding to the UE location to change.

In addition, the V-SMF may alternatively send, to the H-SMF, a third message including the first indication information, where the first indication information indicates that the DNAI corresponding to the UE location changes.

In the foregoing example a or example c, the third message sent by the V-SMF to the H-SMF may not only include the first indication information, but also include one or more of the new DNAI and the new service information.

In the foregoing example b, the third message sent by the new V-SMF to the H-SMF may not only include the first indication information, but also include one or more of the new DNAI and the new service information.

In addition, the V-SMF may alternatively send, to the H-SMF, a third message including an old special DNAI and/or old special service information, to indicate that the UE does not correspond to the old DNAI and/or the old service information when the UE is at the old location. It may be considered that the old special DNAI and/or the old special service information are/is a representation form of the first indication information. When the H-SMF receives the old special DNAI and/or the old special service information, the H-SMF determines that the DNAI corresponding to the UE location changes.

In the foregoing example a or example c, the third message sent by the V-SMF to the H-SMF may include not only the old special DNAI and/or the old special service information, but also the new DNAI and/or the new service information. In the example b, a manner in which the new V-SMF sends the third message to the H-SMF is similar, and details are not described again.

Certainly, there may be another manner in this application, and examples are not enumerated one by one.

It may be understood that, when the UE moves from the old location to the new location, two types of DNAIs may be affected. One type is the old DNAI corresponding to the UE that is at the old location, and the other type is the new DNAI corresponding to the UE that is at the new location. Correspondingly, when the UE moves from the old location to the new location, two types of service information may be affected, namely, the old service information and the new service information. The H-SMF needs to obtain a DNAI and/or service information that may be affected by the UE's movement, where the service information that may be affected is an impact field.

In the foregoing case 1, the H-SMF may obtain the old DNAI and/or the old service information corresponding to the UE that is at the old location; or the H-SMF may obtain the new DNAI and/or the new service information corresponding to the UE that is at the new location; or the H-SMF may obtain the new DNAI and/or the new service information corresponding to the UE that is at the new location and the old DNAI and/or the old service information corresponding to the UE that is at the old location.

In case 2, the H-SMF may obtain an old DNAI and/or old service information corresponding to the UE at the old location; or the H-SMF may obtain a new DNAI and/or new service information (that is, a new special DNAI and/or new special service information) corresponding to the UE at the new location; or the H-SMF may obtain a new DNAI and/or new service information (that is, a new special DNAI and/or new special service information) corresponding to the UE at the new location, and an old DNAI and/or old service information corresponding to UE at the old location.

In case 3, the H-SMF may obtain the old DNAI and/or the old service information (that is, the old special DNAI and/or the old special service information) corresponding to the UE that is at the old location; or the H-SMF may obtain the new DNAI and/or the new service information corresponding to the UE that is at the new location; or the H-SMF may obtain the new DNAI and/or the new service information corresponding to the UE that is at the new location and the old DNAI and/or the old service information (that is, the old special DNAI and/or the old special service information) corresponding to the UE that is at the old location.

Step 402: The H-SMF sends a first message to the V-SMF based on that the DNAI corresponding to the UE location changes.

The first message indicates the V-SMF to send a session modification command to the UE, where the session modification command indicates the UE to re-query an EAS.

Specifically, the H-SMF may carry, in the first message based on that the DNAI corresponding to the UE location changes, one or more of the following: the new service information, the old service information, third service information, and second indication information.

The third service information is determined based on the new service information and the old service information.

The second indication information indicates the V-SMF to send the session modification command to the UE; or the second indication information indicates the V-SMF to determine one or more of the old service information, the new service information, and the third service information; or the second indication information indicates the V-SMF to send the session modification command to the UE after determining one or more of the old service information, the new service information, and the third service information; or the second indication information indicates the V-SMF to trigger the UE to re-query the EAS.

In a possible implementation, the H-SMF sends the first message to the V-SMF based on the obtained new service information and/or old service information. Specifically, when the H-SMF obtains the new service information, the H-SMF may carry the new service information in the first message. When the H-SMF obtains the old service information, the H-SMF may carry the old service information in the first message. When the H-SMF obtains the old service information and the new service information, the H-SMF may determine the third service information based on the old service information and the new service information, and carry the third service information in the first message.

When the H-SMF determines the third service information, specifically, the H-SMF may use a union set of the old service information and the new service information as the third service information. For example, if the first service information is an FQDN 1 to an FQDN 5, and the second service information is an FQDN 1 to an FQDN 10, the third service information is the FQDN 1 to the FQDN 10.

In addition, when the H-SMF obtains the old service information and the new service information, the H-SMF may further include the old service information or the new service information in the first message. Alternatively, the H-SMF may include the old service information and the new service information in the first message.

Optionally, the first message may not only include one or more of the new service information, the old service information, and the third service information, but also include the second indication information. The second indication information may specifically indicate the V-SMF to send the session modification command to the UE based on the service information included in the first message.

In another possible implementation, the H-SMF sends the first message to the V-SMF based on the obtained new DNAI and/or old DNAI. Specifically, if the H-SMF learns of the EC deployment information in the V-PLMN, the H-SMF may determine the new service information based on the EC deployment information and the new DNAI in the V-PLMN; and/or the H-SMF determines the old service information based on the EC deployment information and the old DNAI in the V-PLMN. Then, the first message sent by the H-SMF to the V-SMF includes one or more of the new service information, the old service information, and the third service information.

If the H-SMF cannot learn of the EC deployment information in the V-PLMN, the H-SMF cannot determine the new service information and/or the old service information. The H-SMF may send the first message including the second indication information to the V-SMF. Alternatively, in a specific implementation, the first message is specifically the second indication information, that is, the H-SMF sends the second indication information to the V-SMF. The second indication information may specifically indicate the V-SMF to determine one or more of the old service information, the new service information, and the third service information, and send the session modification command to the UE after determining the one or more of the old service information, the new service information, and the third service information.

It should be further explained that, when the H-SMF cannot determine the new service information and/or the old service information, the H-SMF may alternatively send the first message to the V-SMF for all services of a session. For example, the first message includes service information corresponding to all the services of the session.

The V-SMF herein may be considered as a V-SMF that provides a service for the UE after the DNAI corresponding to the UE location changes. Specifically, in a case in which the UE is served by the V-SMF when the UE is at the old location and at the new location, the H-SMF may send the first message to the V-SMF. In a case in which the UE is served by different V-SMFs when the UE is at the old location and at the new location, the H-SMF may send the first message to the new V-SMF. In a case in which the UE is separately served by the H-SMF and the V-SMF when the UE is at the old location and at the new location, the H-SMF may send the first message to the V-SMF.

Optionally, after determining that the DNAI corresponding to the UE location changes, the H-SMF may further perform the following step 403.

Step 403: The H-SMF sends a second message to an H-EASDF based on that the DNAI changes. The second message indicates to update a DNS handling rule in the H-EASDF.

Specifically, in step 400, the H-SMF may further receive an ECS option (represented as a new ECS option) corresponding to new ULI from the V-SMF. The H-SMF may send the second message to the H-EASDF based on the new ECS option and that the DNAI corresponding to the UE location changes, where the second message includes the new ECS option.

Correspondingly, the H-EASDF updates the DNS handling rule based on the new ECS option in the second message, so that when the UE sends a DNS query to the H-EASDF, the H-EASDF processes the DNS query based on the ECS option in the DNS handling rule, and returns, to the UE, an EAS IP corresponding to an EAS that is close to the UE.

Optionally, the ECS option may be included in the third message, or the V-SMF sends the ECS option as a separate message to the H-SMF. This is not limited in this application.

When the third message includes the new service information, the second message sent by the H-SMF to the H-EASDF may include the new service information and a new ECS option corresponding to the new service information. Correspondingly, the H-EASDF may update, based on the new ECS option and the new service information in the second message, the new ECS option to the DNS handling rule corresponding to the new service information, that is, the H-EASDF may process the DNS query including the new service information based on the new ECS option, for example, insert the new ECS option into the DNS query.

When the third message includes the new DNAI, if the H-SMF perceives the EC deployment information of the V-PLMN, the H-SMF may determine, based on the new DNAI, the new service information corresponding to the new DNAI. In this case, the second message sent by the H-SMF to the H-EASDF may include the ECS option and the new service information. Correspondingly, the H-EASDF may update, based on the ECS option and the new service information in the second message, the ECS option to the DNS handling rule corresponding to the new service information, that is, the H-EASDF may process the DNS query including the new service information based on the new ECS option, for example, insert the new ECS option into the DNS query. If the H-SMF does not perceive the EC deployment information of the V-PLMN, the second message sent by the H-SMF to the H-EASDF may include the ECS option, but does not include the new service information. In this case, the H-EASDF may update the ECS options for all services in the session. For example, if there are services 1 to 10 in the session, the second message received by the H-EASDF is valid for the services 1 to 10. That is, the H-EASDF processes a DNS query sent by the UE for services 1 to 10 based on the new ECS option.

In an actual application, the second message may be specifically a DNS context update request (DNS context update request).

Step 404: The V-SMF sends, in response to the first message, the session modification command to the UE. Correspondingly, the UE receives the session modification command from the V-SMF.

The session modification command includes one or more of the new service information, the old service information, and the third service information. A service corresponding to the old service information (or the first service information) may be referred to as an old service (or a first service), a service corresponding to the new service information (or the second service information) may be referred to as a new service (or a second service), and a service corresponding to the third service information may be referred to as a third service.

When the session modification command includes the new service information, the session modification command may indicate the UE to re-query an EAS that provides the new service. Specifically, the UE may send a DNS query to the H-EASDF based on the new service information in the session modification command, where the DNS query also includes the new service information. Therefore, the UE may re-discover, from the H-EASDF, an EAS IP corresponding to an EAS that provides a service for the new service and that is close to the new location. Similarly, when the session modification command includes the old service information or the third service information, the UE may re-discover, from the H-EASDF, an EAS IP corresponding to an EAS that provides the old service or the third service and that is close to the new location.

In a possible manner, the V-SMF generates a session modification command based on the first message, and sends the session modification command to the UE. For an implementation in which the V-SMF generates the session modification command based on the first message, refer to the following two examples:

In a first example, when the first message includes the new service information, the session modification command generated by the V-SMF may include the new service information. When the first message includes the old service information, the session modification command generated by the V-SMF may include the old service information. When the first message includes the third service information, the session modification command generated by the V-SMF may include the third service information.

In a second example, the first message includes the second indication information, and the V-SMF determines, in response to the second indication information, one or more of the new service information, the old service information, and the third service information, and sends the session modification command to the UE.

Based on which SMF (V-SMF, new V-SMF, or H-SMF) provides a service for the UE when the UE is at the old location or the new location, there may be specifically the following three determining manners.

In a determining manner 1, in a case in which the UE is served by a same V-SMF when the UE is at the old location and at the new location:

The V-SMF may record the new service information and/or the old service information. The V-SMF sends a session modification command including the new service information, the old service information, or the third service information to the UE.

In a determining manner 2, in a case in which the UE is served by different V-SMFs when the UE is at the old location and at the new location:

The new V-SMF may obtain the old service information from a first network element, determine the third service information with reference to the new service information recorded by the new V-SMF, and then send a session modification command including the third service information to the UE.

Alternatively, the new V-SMF may obtain the old service information from a first network element, and send a session modification command including the old service information to the UE.

Alternatively, the new V-SMF records the new service information, and the new V-SMF sends a session modification command including the new service information to the UE.

The first network element may be specifically the old V-SMF or the H-SMF.

When the first network element is the old V-SMF, for an implementation in which the new V-SMF obtains the old service information from the old V-SMF, refer to descriptions of example 2 of case 1 in step 400.

When the first network element is the H-SMF, the new V-SMF may send a context request to the H-SMF, and correspondingly, the H-SMF sends a context response to the new V-SMF. The context response may include the old service information, or include the old DNAI and the old service information.

Further, the context response may further include authorization information, and the authorization information indicates that V-PLMN traffic steering is allowed. Correspondingly, after obtaining the authorization information, the new V-SMF may establish the steering node in the V-PLMN.

For example, the context request may be specifically a PDU session update request (PDU session update request), and the context response may be specifically a PDU session update response (PDU session update response).

In a determining manner 3, in a case in which the UE is separately served by the H-SMF and the V-SMF when the UE is at the old location and at the new location:

The V-SMF may obtain the old service information from the H-SMF, determine the third service information with reference to the new service information recorded by the V-SMF, and then send a session modification command including the third service information to the UE.

Alternatively, the V-SMF may obtain the old service information from the H-SMF, and send a session modification command including the old service information to the UE.

Alternatively, the V-SMF records the new service information, and the V-SMF sends a session modification command including the new service information to the UE.

For example, the V-SMF may send a context request to the H-SMF, and correspondingly, the H-SMF sends a context response to the V-SMF. The context response may include the old service information, or include the old DNAI and the old service information. Optionally, the context response may further include authorization information.

The context request sent by the V-SMF to the H-SMF may be specifically a PDU session create request (PDU session create request), and the context response sent by the H-SMF to the V-SMF may be specifically a PDU session create response (PDU session create response). In other words, in a process of establishing a PDU session between the V-SMF and the H-SMF, the V-SMF may request, from the H-SMF, one or more of the old service information, the old DNAI, and the authorization information.

In the foregoing determining manner 1 to determining manner 3, for a manner in which the V-SMF determines the third service information based on the new service information and the old service information, refer to a manner in which the H-SMF determines the third service information based on the new service information and the old service information. Details are not described again.

It should be further explained that this application may further have the following case: The service information in the first message is inconsistent with the service information in the session modification command sent by the V-SMF to the UE. For example, when the first message includes the old service information, the V-SMF may obtain the new service information, determine the third service information based on the new service information and the old service information, and send the session modification command including the third service information to the UE. For another example, when the first message includes the old service information and the new service information, the V-SMF may determine the third service information based on the old service information and the new service information, and send the session modification command including the third service information to the UE. For still another example, when the first message includes the old service information, the V-SMF may obtain the new service information, and send the session modification command including the new service information to the UE. It may be understood that, in this manner, the V-SMF may determine, based on the first information of the H-SMF, which type of service information is to be included in the session modification command.

Optionally, the session modification command may further include third indication information, where the third indication information may indicate the UE to re-initiate a DNS query. Specifically, the third indication information may indicate the UE to re-initiate the DNS query to the H-EASDF based on the service information (for example, one or more of the new service information, the old service information, and the third service information) in the session modification command. Further, the third indication information may be specifically an EAS rediscovery indication.

In addition, in this application, the session modification command may further include the third indication information but not include the service information. Correspondingly, the UE initiates a DNS query for all services in the session based on the third indication information, to re-query for all EASs that provide a service for the UE.

In an actual application, the first message may be specifically a PDU session update request (PDU session update request), and the session modification command may be specifically a PDU session modification command (PDU session modification command).

To better explain embodiments of this application, the following describes embodiments based on nine specific scenarios.

That a DNAI changes that corresponds to scenario 1 to scenario 3 is specifically inserting a new DNAI, that is, corresponds to case 3 in the embodiment related to FIG. 4.

Further, scenario 1 is specifically: UE is served by a same V-SMF when the UE is at an old location and at a new location, that is, corresponds to example a of case 3 in the embodiment related to FIG. 4.

Scenario 2 is specifically: the UE is separately served by an old V-SMF and a new V-SMF when the UE is at the old location and at the new location, that is, corresponds to example b of case 3 in the embodiment related to FIG. 4.

Scenario 3 is specifically: the UE is separately served by an H-SMF and a V-SMF when the UE is at the old location and at the new location, that is, corresponds to example c of case 3 in the embodiment related to FIG. 4.

It may be considered that, for implementations and explanations of messages and fields in the messages that are not described in detail in the following scenario 1 to scenario 3, refer to descriptions of corresponding locations in the embodiment related to FIG. 4.

That a DNAI changes that corresponds to scenario 4 to scenario 6 is specifically: an old DNAI changes to a new DNAI (that is, corresponds to case 1 in the embodiment related to FIG. 4).

Further, scenario 4 is specifically: the UE is served by a same V-SMF when the UE is at the old location and at the new location, that is, corresponds to example 1 of case 1 in the embodiment related to FIG. 4.

Scenario 5 is specifically: the UE is separately served by the old V-SMF and the new V-SMF when the UE is at the old location and at the new location, that is, corresponds to example 2 of case 1 in the embodiment related to FIG. 4.

Scenario 3 is specifically: the UE is separately served by the H-SMF and the V-SMF when the UE is at the old location and the new location, that is, corresponds to example 3 of case 1 in the embodiment related to FIG. 4.

It may be considered that, for implementations and explanations of messages and fields in the messages that are not described in detail in the following scenario 4 to scenario 6, refer to descriptions of corresponding locations in the embodiment related to FIG. 4.

That a DNAI changes that corresponds to scenario 7 to scenario 9 is specifically: the old DNAI is deleted (that is, corresponds to case 2 in the embodiment related to FIG. 4).

Further, scenario 7 is specifically: the UE is served by a same V-SMF when the UE is at the old location and at the new location, that is, corresponds to example A of case 2 in the embodiment related to FIG. 4.

Scenario 8 is specifically: the UE is separately served by the old V-SMF and the new V-SMF when the UE is at the old location and at the new location, that is, corresponds to example B of case 2 in the embodiment related to FIG. 4.

Scenario 9 is specifically: the UE is separately served by the H-SMF and the V-SMF when the UE is at the old location and at the new location, that is, corresponds to example C of case 2 in the embodiment related to FIG. 4.

It may be considered that, for implementations and explanations of messages and fields in the messages that are not described in detail in the following scenario 7 to scenario 9 refer to descriptions of corresponding locations in the embodiment related to FIG. 4.

The following describes in detail the communications methods in scenario 1 to scenario 9. It should be noted in advance that, in scenario 1 to scenario 9, only an example in which the V-SMF determines service information (that is, an impact field) sent to the UE is used for description. For a manner in which the H-SMF determines the service information sent to the UE, refer to the foregoing descriptions. Details are not described herein again.

It should be noted in advance that, in the following scenario 1 to scenario 9, although both a PDU session update request (that is, a specific example of a third message) sent by the V-SMF (or the new V-SMF) to the H-SMF and a PDU session update request (that is, a specific example of a first message) sent by the H-SMF to the V-SMF (or the new V-SMF) are referred to as PDU session update requests, fields carried in the requests and functions thereof are different. To distinguish between the two PDU session update requests, the PDU session update request sent by the V-SMF (or the new V-SMF) to the H-SMF may be referred to as a PDU session update request 1, and the PDU session update request sent by the H-SMF to the V-SMF (or the new V-SMF) may be referred to as a PDU session update request 2. In addition, in the scenario in which the UE is separately served by the old V-SMF and the new V-SMF when the UE is at the old location and the new location, the new V-SMF needs to send a PDU session update request to the H-SMF to request authorization information. The PDU session update request herein may be referred to as a PDU session update request 3. Correspondingly, the PDU session update response sent by the H-SMF to the new V-SMF may be referred to as a PDU session update response 3.

### Scenario 1

When UE is at an old location and at a new location, the UE is served by a same V-SMF. When the UE is at the old location, the V-SMF does not insert a steering node. When the UE is at the new location, a location at which the V-SMF inserts the steering node corresponds to a new DNAI, that is, that a DNAI changes is inserting the new DNAI.

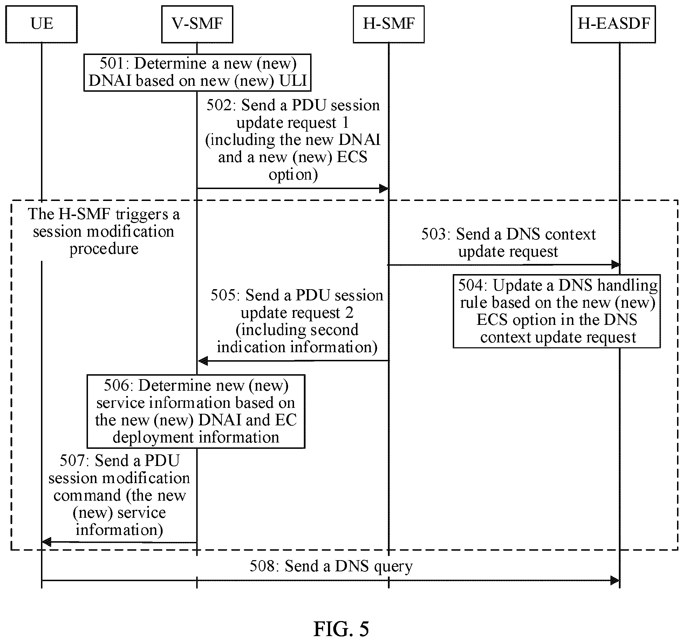

For a flowchart of the communications method in scenario 1, refer to FIG. 5.

Step 501: The V-SMF determines the new DNAI based on new ULI.

Step 502: The V-SMF sends a PDU session update request 1 to an H-SMF, where the PDU session update request 1 is a specific example of the third message in step 400, and the PDU session update request 1 may include the new DNAI and a new ECS option. The new DNAI herein may be used by the V-SMF to indicate, to the H-SMF, that the DNAI corresponding to a UE location changes. The new ECS option is an ECS option corresponding to the UE that is at the new location (or the new ULI).

Correspondingly, the H-SMF receives the PDU session update request 1 from the V-SMF, and triggers a session modification procedure based on the new DNAI and the new ECS option in the PDU session update request 1.

For a specific session modification procedure, refer to the following step 503 to step 508.

Step 503: The H-SMF obtains the new ECS option from the PDU session update request 1, and sends a DNS context update request to an H-EASDF. Correspondingly, the H-EASDF receives the DNS context update request from the H-SMF.

The DNS context update request is a specific example of the second message in step 403, and the DNS context update request may include the new ECS option.

Step 504: The H-EASDF updates a DNS handling rule based on the new ECS option in the DNS context update request.

Step 505: The H-SMF sends a PDU session update request 2 to the V-SMF, where the PDU session update request 2 is a specific example of the first message in step 402, and the PDU session update request 2 includes second indication information.

For example, the H-SMF does not learn of EC deployment information in a V-PLMN. After obtaining the new DNAI from the PDU session update request 1, the H-SMF determines that the DNAI corresponding to the UE location changes; and sends, to the V-SMF, the PDU session update request 2 including the second indication information. The second indication information indicates the V-SMF to send a PDU session modification command to the UE after determining new service information.

Correspondingly, the V-SMF receives the PDU session update request 2 from the H-SMF.

Step 506: After obtaining the second indication information in the PDU session update request 2, the V-SMF determines the new service information based on the new DNAI and the EC deployment information in the V-PLMN.

Step 507: The V-SMF sends the PDU session modification command to the UE, where the PDU session modification command is specifically a specific example of the session modification command in step 404, and the PDU session modification command may include the new service information. Correspondingly, the UE receives the session modification command from the V-SMF.

Step 508: The UE re-sends a DNS query to the H-EASDF for a new service corresponding to the new service information based on the new service information in the session modification command.

Further, in the foregoing step 501 to step 508, for descriptions of the PDU session update request 1 (that is, the third message) and fields in the PDU session update request 1, the PDU session update request 2 (that is, the first message) and fields in the PDU session update request 2, the DNS context update request (that is, the second message) and fields in the DNS context update request, and the PDU session modification command (that is, the session modification command) and fields in the PDU session modification command, refer to descriptions of example a of case 3 in the embodiment related to FIG. 4.

### Scenario 2

When the UE is at the old location and the new location, the UE is separately served by the old V-SMF and the new V-SMF. When the UE is at the old location, the old V-SMF does not insert the steering node. When the UE is at the new location, the location at which the new V-SMF inserts the steering node corresponds to the new DNAI. In other words, a DNAI change is inserting the new DNAI.

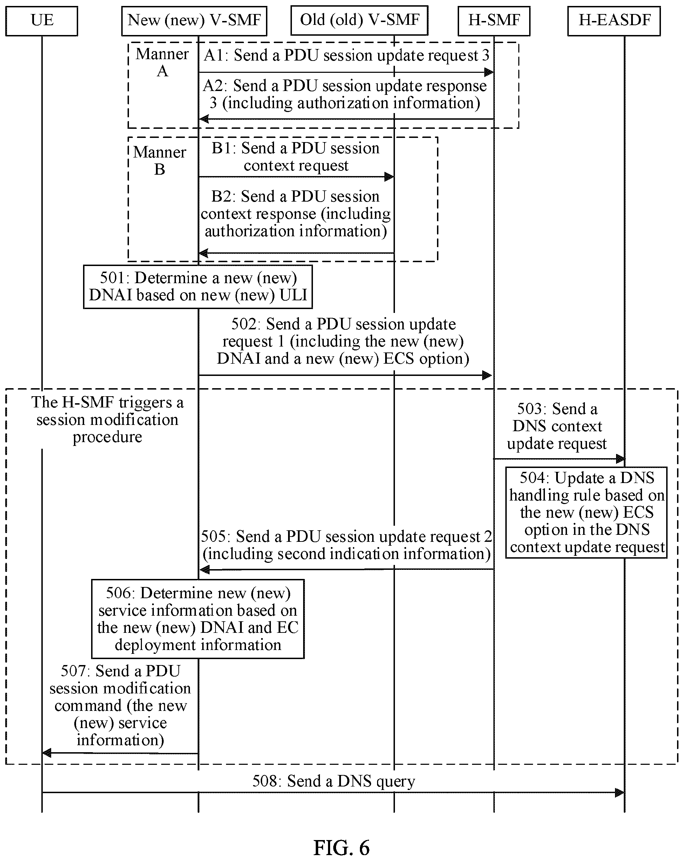

For a flowchart of the communications method in scenario 2, refer to FIG. 6.

It may be understood that, the new V-SMF determines the new DNAI based on new ULI of the UE, the new V-SMF sends a PDU session update request 1 to an H-SMF, the H-SMF triggers a session modification procedure based on the PDU session update request 1, and the like. These are similar to those in scenario 1. Correspondingly, FIG. 6 may also include the foregoing step 501 to step 508, and details are not described again.

Because the V-SMF that provides a service for the UE changes, the new V-SMF needs to first obtain authorization information, and then establish the steering node in a range of the new DNAI of a V-PLMN based on the authorization information.

The new V-SMF may request the authorization information from the H-SMF or the old V-SMF. For details, refer to the following manner A and manner B.

Manner A: The new V-SMF obtains the authorization information from the H-SMF.

Step A1: The new V-SMF sends a PDU session update request 3 to the H-SMF.

Step A2: The H-SMF sends a PDU session update response 3 to the new V-SMF, where the PDU session update response 3 includes the authorization information.

The PDU session update request 3 is a specific example of the context request in step 404, and the PDU session update response 3 is a specific example of the context response in step 404. The PDU session update request 3 may be used by the new V-SMF to request, from the H-SMF, the PDU session update response 3 that includes the authorization information.

Manner B: The new V-SMF obtains the authorization information from the old V-SMF.

Step B1: The new V-SMF sends a PDU session context request to the old V-SMF.

Step B2: The old V-SMF sends a PDU session context response to the new V-SMF, where the PDU session context response includes the authorization information.

The PDU session context request is a specific example of the context request in step 404, and the PDU session context response is a specific example of the context response in step 404. The PDU session context request may be used by the new V-SMF to request, from the old V-SMF, the PDU session context response that includes the authorization information.

Manner A and Manner B occur in a procedure of changing a V-SMF (from the old V-SMF to the new V-SMF), that is, in a handover procedure caused by UE's movement.

### Scenario 3

When UE is at an old location and at a new location, the UE is separately served by an H-SMF and a V-SMF. When the UE is at the old location, the H-SMF does not insert a steering node. When the UE is at the new location, a location at which the V-SMF inserts the steering node corresponds to a new DNAI, that is, that a DNAI changes is inserting the new DNAI.

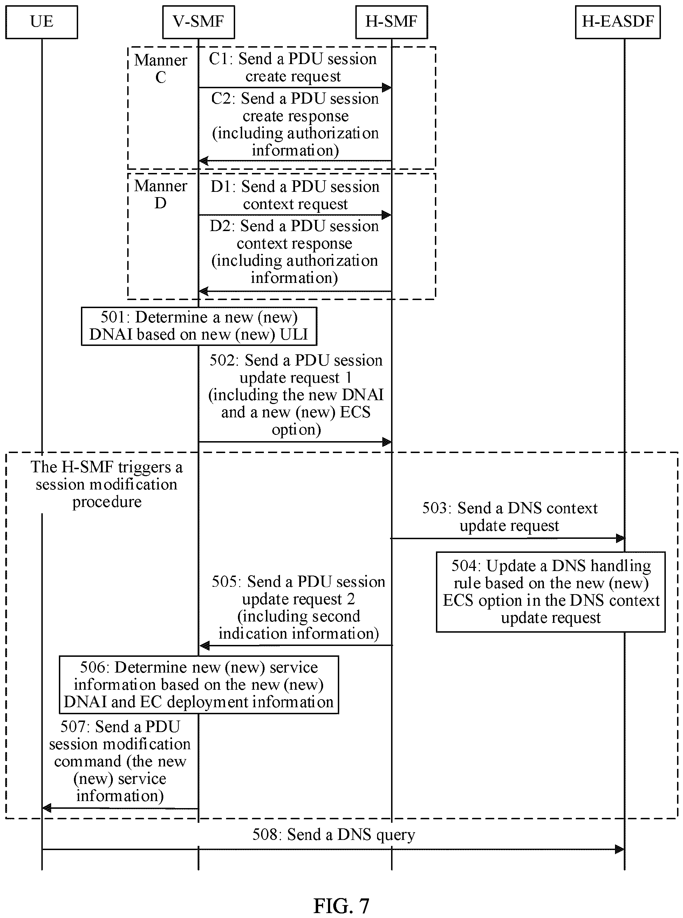

For a flowchart of the communications method in scenario 3, refer to FIG. 7.

It may be understood that, the V-SMF determines the new DNAI based on new ULI of the UE, the V-SMF sends a PDU session update request 1 to the H-SMF, the H-SMF triggers a session modification procedure based on the PDU session update request 1, and the like. These are similar to those in scenario 1. Correspondingly, FIG. 7 may also include step 501 to step 508, and details are not described again.

Because the V-SMF is a newly inserted V-SMF, the V-SMF needs to first obtain authorization information from the H-SMF, and then establish the steering node in a range of the new DNAI of a V-PLMN based on the authorization information.

An implementation in which the V-SMF requests the authorization information from the H-SMF may include the following manner C and manner D.

Manner C: The V-SMF obtains the authorization information in a process of establishing a PDU session with the H-SMF.

Step C1: The V-SMF sends a PDU session create request to the H-SMF.

Step C2: The H-SMF sends a PDU session create response to the V-SMF, where the PDU session create response includes the authorization information.

The PDU session create request is a specific example of the context request in step 404, and the PDU session create response is a specific example of the context response in step 404. The PDU session create request may be used by the V-SMF to request, from the H-SMF, the PDU session create response that includes the authorization information.

Manner D: After establishing the PDU session with the H-SMF, the V-SMF obtains the authorization information from the H-SMF.

Step D1: The V-SMF sends a PDU session context request to the H-SMF.

Step D2: The H-SMF sends a PDU session context response to the V-SMF, where the PDU session context response includes the authorization information.

The PDU session context request is a specific example of the context request in step 404, and the PDU session context response is a specific example of the context response in step 404. The PDU session context request may be used by the V-SMF to request, from the H-SMF, the PDU session context response that includes the authorization information.

Manner C and Manner D occur in a V-SMF insertion procedure, that is, in a handover procedure caused by UE's movement.

### Scenario 4

When UE is at an old location and a new location, the UE is served by a same V-SMF. When the UE is at the old location, a location at which the V-SMF inserts a steering node corresponds to an old DNAI. When the UE is at the new location, a location at which the V-SMF inserts a steering node corresponds to a new DNAI. In other words, that a DNAI changes is: the DNAI changes from the old DNAI to the new DNAI.

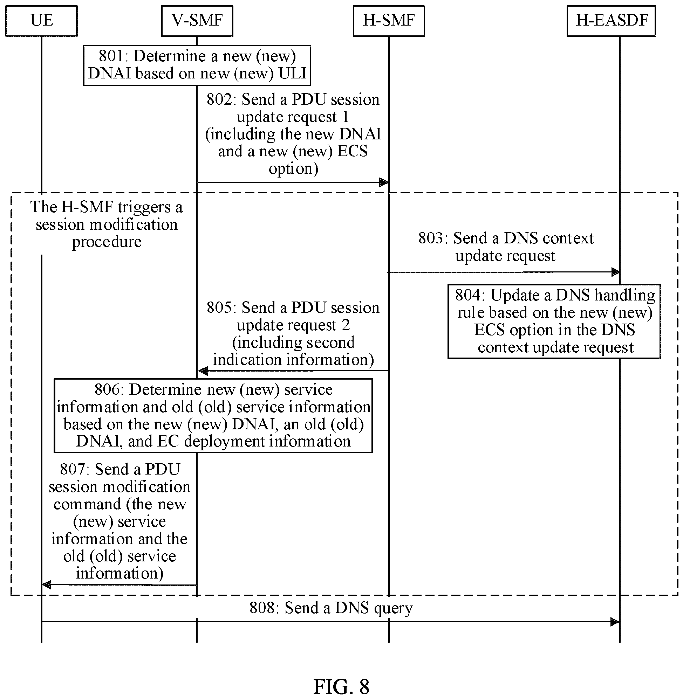

For a flowchart of the communications method in scenario 4, refer to FIG. 8.

Step 801: The V-SMF determines the new DNAI based on new ULI.

Step 802: The V-SMF sends a PDU session update request 1 to an H-SMF, where the PDU session update request 1 is a specific example of the third message in step 400, and the PDU session update request 1 may include the new DNAI and a new ECS option. The new DNAI herein may be used by the V-SMF to indicate, to the H-SMF, that the DNAI corresponding to a UE location changes. The new ECS option is an ECS option corresponding to the UE that is at a new location (or the new ULI).

Correspondingly, the H-SMF receives the PDU session update request 1 from the V-SMF, and triggers a session modification procedure based on the new DNAI and the new ECS option in the PDU session update request 1.

For a specific session modification procedure, refer to the following step 803 to step 808.

Step 803: The H-SMF obtains the new ECS option from the PDU session update request 1, and sends a DNS context update request to an H-EASDF. Correspondingly, the H-EASDF receives the DNS context update request from the H-SMF. The DNS context update request is a specific example of the second message in step 403, and the DNS context update request may include the new ECS option.

Step 804: The H-EASDF updates a DNS handling rule based on the new ECS option in the DNS context update request.

Step 805: The H-SMF sends a PDU session update request 2 to the V-SMF, where the PDU session update request 2 is a specific example of the first message in step 402, and the PDU session update request 2 includes second indication information.

For example, the H-SMF does not learn of EC deployment information in a V-PLMN. After obtaining the new DNAI from the PDU session update request 1, the H-SMF determines that the DNAI corresponding to the UE location changes; and sends, to the V-SMF, the PDU session update request 2 including the second indication information. The second indication information indicates the V-SMF to send a PDU session modification command to the UE after determining new service information and old service information.

Correspondingly, the V-SMF receives the PDU session update request 2 from the H-SMF.

Step 806: After obtaining the second indication information in the PDU session update request 2, the V-SMF determines the new service information and the old service information based on the new DNAI, the old DNAI, and the EC deployment information in the V-PLMN.

Step 807: The V-SMF sends the PDU session modification command to the UE, where the PDU session modification command is specifically a specific example of the session modification command in step 404, and the PDU session modification command may include the new service information and the old service information. Correspondingly, the UE receives the session modification command from the V-SMF.

Step 808: The UE sends a DNS query to the H-EASDF for a new service corresponding to the new service information and an old service corresponding to the old service information based on the new service information and the old service information in the session modification command.

Further, in the foregoing step 801 to step 808, for descriptions of the PDU session update request 1 and fields in the PDU session update request 1, the PDU session update request 2 and fields in the PDU session update request 2, the DNS context update request and fields in the DNS context update request, and the PDU session modification command and fields in the PDU session modification command, refer to descriptions of example 1 of case 1 in the embodiment related to FIG. 4.

### Scenario 5

When UE is at an old location and at a new location, the UE is separately served by an old V-SMF and a new V-SMF. When the UE is at the old location, a location at which the old V-SMF inserts a steering node corresponds to an old DNAI. When the UE is at the new location, a location at which the new V-SMF inserts a steering node corresponds to a new DNAI. In other words, that a DNAI changes is: the DNAI changes from the old DNAI to the new DNAI.

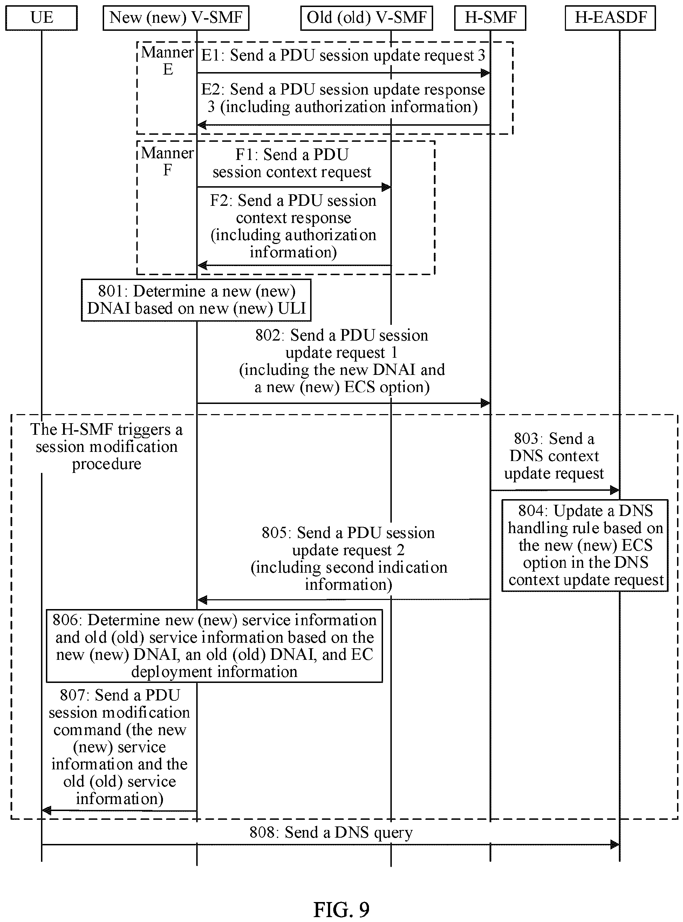

For a flowchart of the communications method in scenario 5, refer to FIG. 9.

It may be understood that, the new V-SMF determines the new DNAI based on new ULI of the UE, the new V-SMF sends a PDU session update request 1 to an H-SMF, and the H-SMF triggers a session modification procedure based on the PDU session update request 1. These are similar to those in scenario 4. Correspondingly, FIG. 9 may include step 801 to step 808, and details are not described again.

Because the new V-SMF herein is a newly inserted V-SMF, the new V-SMF needs to first obtain authorization information, or first obtain authorization information and old service information.

Specifically, the new V-SMF may obtain the authorization information or obtain the authorization information and the old service information from the H-SMF in the following manner E:

Manner E: The new V-SMF obtains the authorization information from the H-SMF.

Step E1: The new V-SMF sends a PDU session update request 3 to the H-SMF.

Step E2: The H-SMF sends a PDU session update response 3 to the new V-SMF, where the PDU session update response 3 includes the authorization information. Optionally, the PDU session update response 3 further includes the old service information.

It should be noted that, when the H-SMF includes the old service information, the PDU session update response 3 sent by the H-SMF to the new V-SMF may further include the old service information. Optionally, the H-SMF may obtain the old service information from the old V-SMF in advance, or obtain the old DNAI from the old V-SMF in advance, and determine the old service information based on the old DNAI and EC deployment information of a V-PLMN.

The PDU session update request 3 is a specific example of the context request in step 404, and the PDU session update response 3 is a specific example of the context response in step 404. The PDU session update request 3 may be used by the new V-SMF to request, from the H-SMF, the PDU session update response 3 that includes the authorization information (or the authorization information and the old service information).

The new V-SMF may obtain the authorization information or obtain the authorization information and the old service information from the old V-SMF in the following manner F:

Step F1: The new V-SMF sends a PDU session context request to the old V-SMF.

Step F2: The old V-SMF sends a PDU session context response to the new V-SMF, where the PDU session context response includes the authorization information. Optionally, the PDU session context response further includes the old service information.

The PDU session context request is a specific example of the context request in step 404, and the PDU session context response is a specific example of the context response in step 404. The PDU session context request may be used by the new V-SMF to request, from the old V-SMF, a PDU session context response that includes the authorization information (or the authorization information and the old service information).

### Scenario 6

When UE is at an old location and at a new location, the UE is separately served by an H-SMF and a V-SMF. When the UE is at the old location, a location at which the H-SMF inserts a steering node corresponds to an old DNAI. When the UE is at the new location, a location at which the V-SMF inserts a steering node corresponds to a new DNAI. In other words, that a DNAI changes is: the DNAI changes from the old DNAI to the new DNAI.

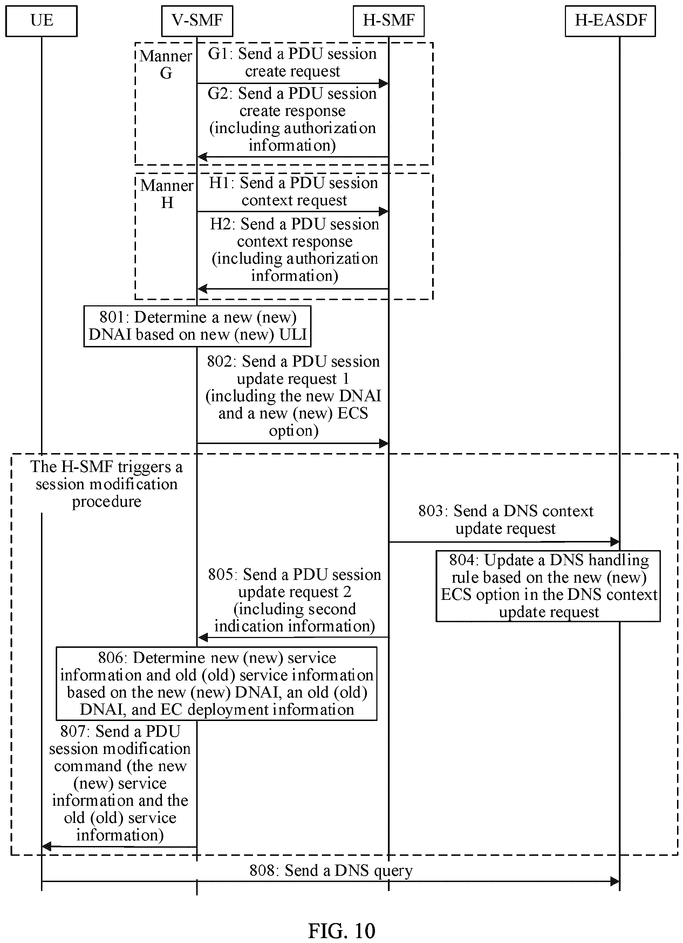

For a flowchart of the communications method in scenario 6, refer to FIG. 10.

It may be understood that, an implementation in which the V-SMF determines the new DNAI based on new ULI of the UE, that the V-SMF sends a PDU session update request 1 to the H-SMF, and that the H-SMF triggers a session modification procedure based on the PDU session update request 1 are similar to those in scenario 4. Correspondingly, FIG. 10 may include step 801 to step 808, and details are not described again.

Because the V-SMF is a newly inserted V-SMF, the V-SMF needs to first obtain authorization information or obtain authorization information and old service information from the H-SMF.

Specifically, the V-SMF may obtain the authorization information or obtain the authorization information and the old service information from the H-SMF in the following manner G and manner H:

Manner G: The V-SMF obtains the authorization information in a process of establishing a PDU session with the H-SMF.

Step G1: The V-SMF sends a PDU session create request to the H-SMF.

Step G2: The H-SMF sends a PDU session create response to the V-SMF, where the PDU session create response includes the authorization information. Optionally, the PDU session create response may further include the old service information.

The PDU session create request is a specific example of the context request in step 404, and the PDU session create response is a specific example of the context response in step 404. The PDU session create request may be used by the V-SMF to request, from the H-SMF, the PDU session create response that includes the authorization information (or the authorization information and the old service information).

Manner H: After establishing the PDU session with the H-SMF, the V-SMF obtains the authorization information from the H-SMF.

Step H1: The V-SMF sends a PDU session context request to the H-SMF.

Step H2: The H-SMF sends a PDU session context response to the V-SMF, where the PDU session context response includes the authorization information. Optionally, the PDU session context response further includes the old service information.

The PDU session context request is a specific example of the context request in step 404, and the PDU session context response is a specific example of the context response in step 404. The PDU session context request may be used by the V-SMF to request, from the H-SMF, the PDU session context response that includes the authorization information (or the authorization information and the old service information).

Because the V-SMF cannot obtain EC deployment information of an H-PLMN, the H-SMF may directly send the old service information to the V-SMF in step G2 or step H2.

### Scenario 7

When UE is at an old location and at a new location, the UE is served by a same V-SMF. When the UE is at the old location, a location at which the V-SMF inserts a steering node corresponds to an old DNAI. When the UE is at the new location, the V-SMF does not insert a steering node. In other words, that a DNAI changes is: the old DNAI is deleted.

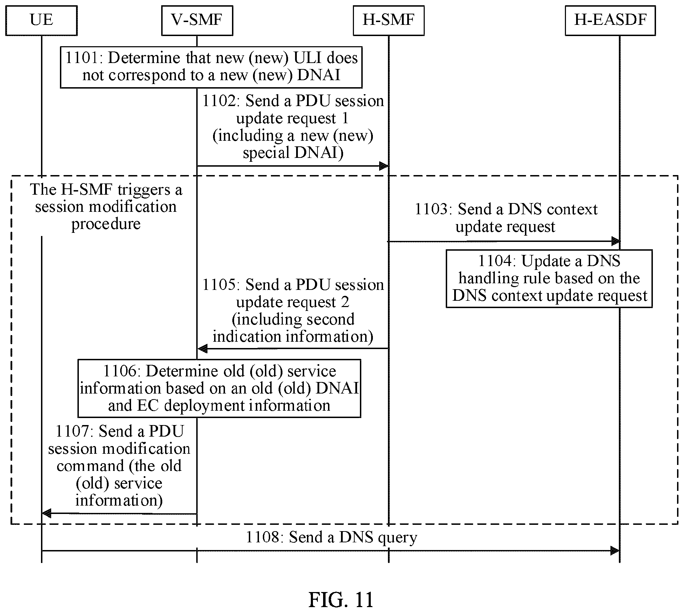

For a flowchart of the communications method in scenario 7, refer to FIG. 11.

Step 1101: The V-SMF determines that new ULI does not correspond to a new DNAI. For example, the V-SMF does not determine the new DNAI based on the new ULI, that is, determines that the UE cannot access an EC service at the new ULI.

Step 1102: The V-SMF sends a PDU session update request 1 to an H-SMF, where the PDU session update request 1 is a specific example of the third message in step 400, and the PDU session update request 1 may include a new special DNAI. The new special DNAI herein may be used by the V-SMF to indicate, to the H-SMF, that the DNAI corresponding to a UE location changes.

It may be understood that the PDU session update request 1 may alternatively include first indication information, or the session update request 1 is first indication information, to indicate that the DNAI changes.

Correspondingly, the H-SMF receives the PDU session update request 1 from the V-SMF, determines, based on the PDU session update request 1, that the DNAI changes, and triggers a session modification procedure.

For a specific session modification procedure, refer to the following step 1103 to step 1108.

Step 1103: The H-SMF sends a DNS context update request to an H-EASDF, and correspondingly, the H-EASDF receives the DNS context update request from the H-SMF. The DNS context update request is a specific example of the second message in step 403, and the DNS context update request is used for deleting an ECS option that corresponds to the UE at the old location and that is stored in the H-EASDF.

Step 1104: The H-EASDF updates a DNS handling rule based on the DNS context update request, that is, deletes the ECS option that corresponds to the UE at the old location and that is stored in the H-EASDF.

Step 1105: The H-SMF sends a PDU session update request 2 to the V-SMF, where the PDU session update request 2 is a specific example of the first message in step 402. For example, the H-SMF determines, based on the new special DNAI in the PDU session update request 1, that the DNAI corresponding to the UE location changes; and sends, to the V-SMF, the PDU session update request 2 including second indication information. The second indication information indicates the V-SMF to send a PDU session modification command to the UE after determining old service information.

Correspondingly, the V-SMF receives the PDU session update request 2 from the H-SMF.

Step 1106: After obtaining the second indication information in the PDU session update request 2, the V-SMF determines the old service information based on the old DNAI and EC deployment information in a V-PLMN.

Step 1107: The V-SMF sends the PDU session modification command to the UE, where the PDU session modification command is specifically a specific example of the session modification command in step 404, and the PDU session modification command may include the old service information. Correspondingly, the UE receives the session modification command from the V-SMF.

Step 1108: The UE re-sends a DNS query to the H-EASDF for an old service corresponding to the old service information based on the old service information in the session modification command.

Further, in step 1101 to step 1108, for descriptions of the PDU session update request 1 and fields in the PDU session update request 1, the PDU session update request 2 and fields in the PDU session update request 2, the DNS context update request and fields in the DNS context update request, and the PDU session modification command and fields in the PDU session modification command, refer to descriptions of example A of case 2 in the embodiment related to FIG. 4.

### Scenario 8

When UE is at an old location and at a new location, the UE is separately served by an old V-SMF and a new V-SMF. When the UE is at the old location, a location at which the old V-SMF inserts a steering node corresponds to an old DNAI. When the UE is at the new location, the new V-SMF does not insert a steering node. In other words, that a DNAI changes is deleting the old DNAI.

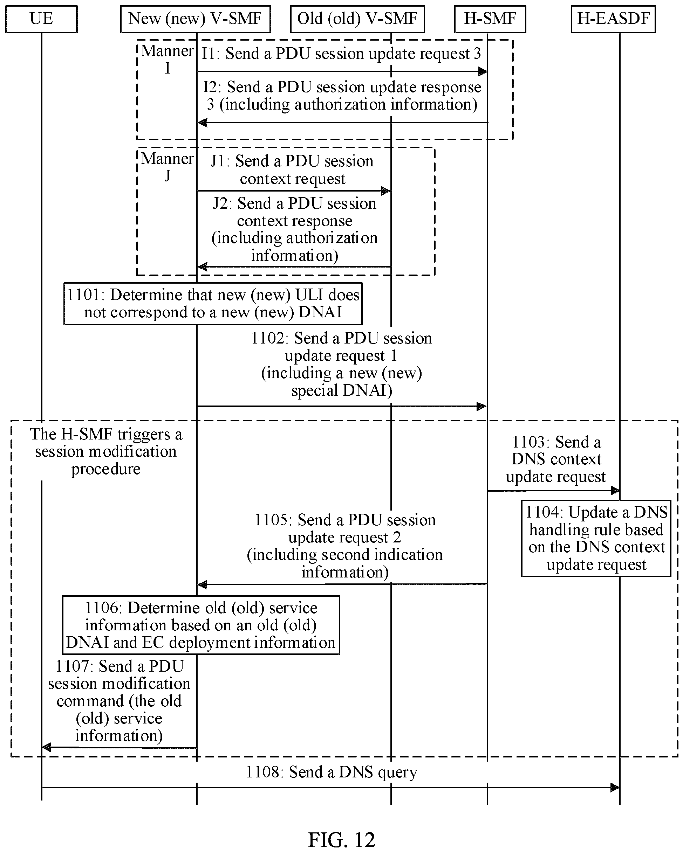

For a flowchart of the communications method in scenario 8, refer to FIG. 12.

It may be understood that, the new V-SMF determines a new DNAI based on new ULI of the UE, the new V-SMF sends a PDU session update request 1 to an H-SMF, and the H-SMF triggers a session modification procedure based on the PDU session update request 1. These are similar to those in scenario 7. Correspondingly, FIG. 12 may include step 1101 to step 1108, and details are not described again.

Because the new V-SMF is a newly inserted V-SMF, the new V-SMF needs to first obtain authorization information, or first obtain authorization information and old service information. Specifically, the new V-SMF may obtain the authorization information or obtain the authorization information and the old service information in the following manner I and manner J:

Manner I: The new V-SMF obtains the authorization information from the H-SMF.

Step I1: The new V-SMF sends a PDU session update request 3 to the H-SMF.

Step 12: The H-SMF sends a PDU session update response 3 to the new V-SMF, where the PDU session update response 3 includes the authorization information.

It should be noted that, when the H-SMF includes the old service information, the PDU session update response 3 sent by the H-SMF to the new V-SMF may further include the old service information. Optionally, the H-SMF may obtain the old service information from the old V-SMF in advance, or obtain the old DNAI from the old V-SMF in advance, and determine the old service information based on the old DNAI and EC deployment information of a V-PLMN.

The PDU session update request 3 is a specific example of the context request in step 404, and the PDU session update response 3 is a specific example of the context response in step 404. The PDU session update request 3 may be used by the new V-SMF to request, from the H-SMF, the PDU session update response 3 that includes the authorization information (or the authorization information and the old service information).

Manner J: The new V-SMF obtains the authorization information from the old V-SMF.

Step 11: The new V-SMF sends a PDU session context request to the old V-SMF.

Step J2. The old V-SMF sends a PDU session context response to the new V-SMF, where the PDU session context response includes the authorization information. Optionally, the PDU session context response further includes the old service information.

The PDU session context request is a specific example of the context request in step 404, and the PDU session context response is a specific example of the context response in step 404. The PDU session context request may be used by the new V-SMF to request, from the old V-SMF, the PDU session context response that includes the authorization information (or the authorization information and the old service information).

### Scenario 9

When UE is at an old location and at a new location, the UE is separately served by an H-SMF and a V-SMF. When the UE is at the old location, a location at which the H-SMF inserts a steering node corresponds to an old DNAI. When the UE is at the new location, the V-SMF does not insert a steering node, that is, that a DNAI changes is deleting the old DNAI.

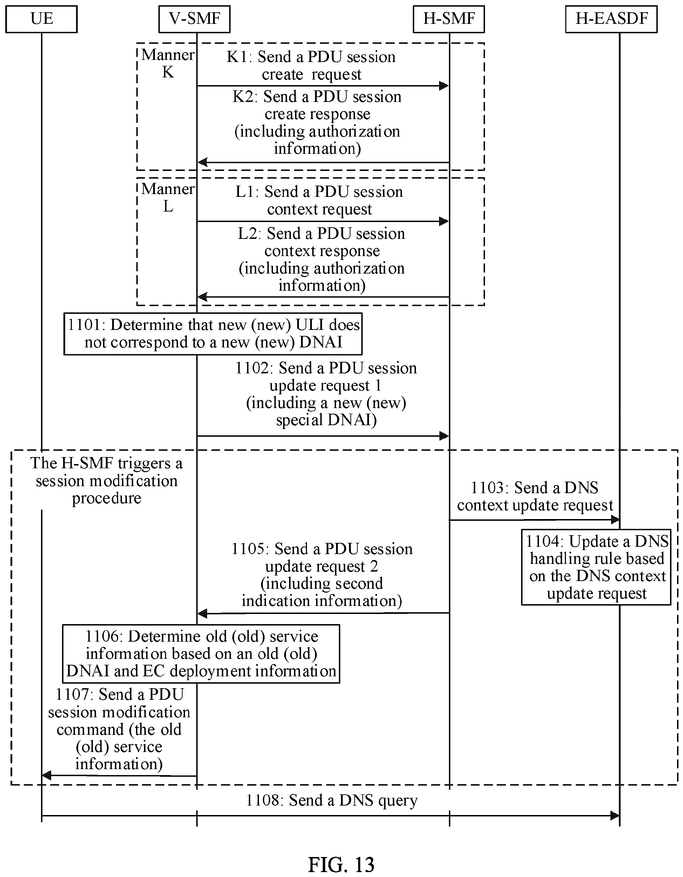

For a flowchart of the communications method in scenario 9, refer to FIG. 13.

It may be understood that, an implementation in which the V-SMF determines a new DNAI based on new ULI of the UE, that the V-SMF sends a PDU session update request 1 to the H-SMF, and that the H-SMF triggers a session modification procedure based on the PDU session update request 1 are similar to those in scenario 7. Correspondingly, FIG. 13 may include step 1101 to step 1108, and details are not described again.

Because the V-SMF herein is a newly inserted V-SMF, the V-SMF needs to first obtain authorization information or obtain authorization information and old service information from the H-SMF. Specifically, the V-SMF may obtain the authorization information or obtain the authorization information and the old service information from the H-SMF in the following manner K and manner L:

Manner K: The V-SMF obtains the authorization information in a process of establishing a PDU session with the H-SMF.

Step K1: The V-SMF sends a PDU session create request to the H-SMF.

Step K2: The H-SMF sends a PDU session create response to the V-SMF, where the PDU session create response includes the authorization information. Optionally, the PDU session create response may further include the old service information.

The PDU session create request is a specific example of the context request in step 404, and the PDU session create response is a specific example of the context response in step 404. The PDU session create request may be used by the V-SMF to request, from the H-SMF, the PDU session create response that includes the authorization information (or the authorization information and the old service information).

Manner L: After establishing the PDU session with the H-SMF, the V-SMF obtains the authorization information from the H-SMF.

Step L1: The V-SMF sends a PDU session context request to the H-SMF.

Step L2: The H-SMF sends a PDU session context response to the V-SMF, where the PDU session context response includes the authorization information. Optionally, the PDU session context response further includes the old service information.

The PDU session context request is a specific example of the context request in step 404, and the PDU session context response is a specific example of the context response in step 404. The PDU session context request may be used by the V-SMF to request, from the H-SMF, the PDU session context response that includes the authorization information (or the authorization information and the old service information).

This application further provides another communications method in a roaming scenario. Specifically, after a V-SMF determines that UE's movement causes a DNAI corresponding to a UE location to change, the V-SMF sends a session modification command to the UE. Correspondingly, the UE may re-initiate an EAS query process based on the session modification command.

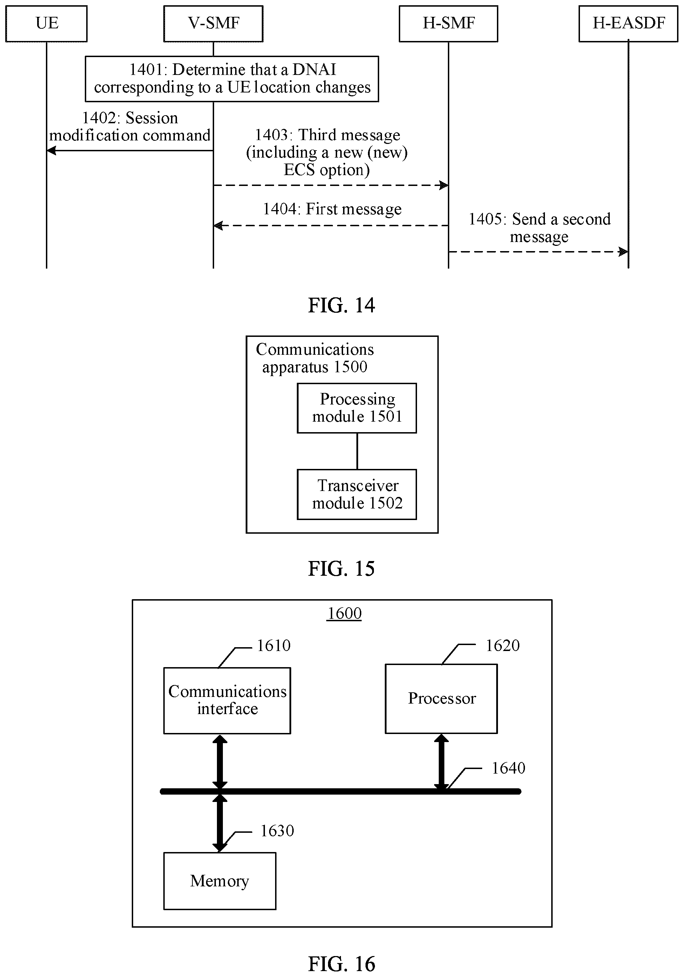

For details, refer to an example of a flowchart of another communications method in a roaming scenario shown in FIG. 14.

Step 1401: A V-SMF determines that a DNAI corresponding to a UE location changes, where the V-SMF is a V-SMF that provides a service for the UE after the DNAI corresponding to the UE location changes.

That the DNAI changes may specifically include: case 1: An old DNAI changes to a new DNAI; case 2: An old DNAI is deleted; and case 3: Anew DNAI is inserted. For details about the three cases, refer to the description in step 401.

Further, in a case in which the UE is served by a same V-SMF when the UE is at an old location and at a new location, the same V-SMF may determine that the DNAI corresponding to the UE location changes.

In a case in which the UE is separately served by an old V-SMF and a new V-SMF when the UE is at an old location and at a new location, the new V-SMF may determine that the DNAI corresponding to the UE location changes.

In a case in which the UE is separately served by an H-SMF and the V-SMF when the UE is at an old location and at a new location, the V-SMF may determine that the DNAI corresponding to the UE location changes.

For description of the V-SMF or the new V-SMF, refer to the description of step 400 in the embodiment related to FIG. 4.

Step 1402: The V-SMF sends a session modification command to the UE based on that the DNAI corresponding to the UE location changes, where the session modification command indicates the UE to re-query an EAS.

Specifically, the V-SMF may determine, based on that the DNAI corresponding to the UE location changes, that the session modification command includes one or more of the following: new service information, old service information, and third service information. For descriptions of the new service information, the old service information, and the third service information, refer to the description of the session modification command in step 404.

For example, when the V-SMF obtains the new service information, the V-SMF may carry the new service information in the session modification command. When the V-SMF obtains the old service information, the V-SMF may carry the old service information in the session modification command. When the V-SMF obtains the old service information and the new service information, the V-SMF may determine the third service information based on the old service information and the new service information, and carry the third service information in the session modification command. For an implementation in which the V-SMF determines the third service information, refer to the implementation in which the H-SMF determines the third service information in step 402.

Further, the V-SMF may specifically obtain the new service information and/or the old service information in the following manners:

In the case in which the UE is served by a same V-SMF when the UE is at the old location and at the new location, the same V-SMF may determine the old service information and/or the new service information.

In the case in which the UE is separately served by the old V-SMF and the new V-SMF when the UE is at the old location and at the new location, the new V-SMF may obtain the old service information from a first network element, and/or the new V-SMF determines the new service information. The first network element may be specifically the old V-SMF or the H-SMF.

In the case in which the UE is separately served by the H-SMF and the V-SMF when the UE is at the old location and at the new location, the V-SMF may obtain the old service information from the H-SMF, and/or the new V-SMF determines the new service information.

The V-SMF obtains the old service information from the H-SMF or the new V-SMF obtains the old service information from the H-SMF or the old V-SMF. For details, refer to the description in step 404.

Optionally, after the V-SMF determines that the DNAI corresponding to the UE location changes, the following step 1403 to step 1405 may be further included.

Step 1403: The V-SMF sends a third message to the H-SMF based on that the DNAI changes.

Correspondingly, the H-SMF receives the third message from the V-SMF.

The third message may include a new ECS option, or the third message is a new ECS option. For example, the V-SMF may determine the new ECS option based on that the DNAI changes, and send the new ECS option to the H-SMF. Further, the third message may further include the new DNAI and/or the new service information.

Step 1404: The H-SMF sends a first message to the V-SMF.

The first message may be specifically a response. For example, the first message may not include any service information. It is understood that the first message includes a specific IE, and a value of the IE may be null.

Step 1405: The H-SMF sends a second message to an H-EASDF based on the new ECS option. The second message indicates to update a DNS handling rule in the H-EASDF.

Specifically, when the third message includes the new ECS option (or the third message is the new ECS option), the second message sent by the H-SMF to the H-EASDF also includes the new ECS option (or the second message is the new ECS option). Correspondingly, the H-EASDF may update a DNS handling rule for all services in a session.

When the third message includes the new ECS option and the new service information, the second message sent by the H-SMF to the H-EASDF may also include the new ECS option and the new service information. Correspondingly, the H-EASDF may update, based on the new ECS option and the new service information in the second message, the new ECS option to the DNS handling rule corresponding to the new service information, that is, the H-EASDF may process a DNS query including the new service information based on the new ECS option, for example, insert the new ECS option into the DNS query.

When the third message includes the new ECS option and the new DNAI, the H-SMF may determine, based on whether the H-SMF perceives EC deployment information of a V-PLMN, content included in the second message sent to the H-EASDF.

For example, when the third message includes the new DNAI and the new ECS option, if the H-SMF perceives the EC deployment information of the V-PLMN, the H-SMF may determine the new service information based on the new DNAI. Correspondingly, the second message sent by the H-SMF to the H-EASDF includes the new ECS option and the new service information. The H-EASDF may update the new ECS option to the DNS handling rule corresponding to the new service information based on the new ECS option and the new service information that are in the second message. If the H-SMF does not perceive the EC deployment information of the V-PLMN, the second message sent by the H-SMF to the H-EASDF does not include the new service information. The H-EASDF may update ECS options for all services in the session.

It may be understood that an execution sequence of step 1402 and step 1403 is not limited in the present invention.

Based on the foregoing content and a same concept, FIG. 15 and FIG. 16 are schematic diagrams of structures of possible communications apparatuses according to this application. These communications apparatuses may be configured to implement functions of the H-SMF, the V-SMF, the H-EASDF, or the UE in the foregoing method embodiments, and therefore can also implement beneficial effects of the foregoing method embodiments.

As shown in FIG. 15, a communications apparatus 1500 includes a processing module 1501 and a transceiver module 1502.

The processing module 1501 in the communications apparatus 1500 may be configured to implement a function of the H-SMF in the method embodiments shown in FIG. 4 to FIG. 13, or may be configured to implement a function of the V-SMF in the method embodiments shown in FIG. 4 to FIG. 13, or may be configured to implement a function of the H-EASDF in the method embodiments shown in FIG. 4 to FIG. 13, or may be configured to implement a function of the UE in the method embodiments shown in FIG. 4 to FIG. 13. The transceiver module 1502 may be configured to support communications between the communications apparatus 1500 and another communications device. For example, when the communications apparatus 1500 is the H-SMF in the method embodiments shown in FIG. 4 to FIG. 13, the transceiver module 1502 may be configured to send first information to the V-SMF.

The processing module 1501 in the communications apparatus 1500 may be configured to implement a function of the H-SMF in the method embodiment shown in FIG. 14, or may be configured to implement a function of the V-SMF in the method embodiment shown in FIG. 14, or may be configured to implement a function of the H-EASDF in the method embodiment shown in FIG. 14, or may be configured to implement a function of the UE in the method embodiment shown in FIG. 14. The transceiver module 1502 may be configured to support communications between the communications apparatus 1500 and another communications device. For example, when the communications apparatus 1500 is the V-SMF in the method embodiment shown in FIG. 14, the transceiver module 1502 may be configured to send a session modification command to the UE.

As shown in FIG. 16, an apparatus 1600 is provided according to embodiments of this application. The apparatus shown in FIG. 16 may be an implementation of a hardware circuit of the apparatus shown in FIG. 15. The apparatus is applicable to the flowcharts shown above, and performs functions of the H-SMF, the V-SMF, the H-EASDF, or the UE in the foregoing method embodiments.

For ease of description, FIG. 16 shows only main components of the apparatus.

The apparatus 1600 shown in FIG. 16 includes a communications interface 1610, a processor 1620, and a memory 1630. The memory 1630 is configured to store program instructions and/or data. The processor 1620 may perform an operation in collaboration with the memory 1630. The processor 1620 may execute the program instructions stored in the memory 1630. When the instructions or the program stored in the memory 1630 is executed, the processor 1620 is configured to perform an operation performed by the processing module 1501 in the foregoing embodiment, and the communications interface 1610 is configured to perform an operation performed by the transceiver module 1502 in the foregoing embodiment.

The memory 1630 is coupled to the processor 1620. Couplings in embodiments of this application are indirect couplings or communications connections between apparatuses, units, or modules, may be in an electrical, mechanical, or another form, and are used for information exchange between the apparatuses, the units, or the modules. At least one of the memories 1630 may be included in the processor 1620.

In embodiments of this application, the communications interface may be a transceiver, a circuit, a bus, a module, or another type of communications interface. In embodiments of this application, when the communications interface is a transceiver, the transceiver may include an independent receiver and an independent transmitter, or may be a transceiver integrating a transceiver function, or may be a communications interface.

The apparatus 1600 may further include a communications line 1640. The communications interface 1610, the processor 1620, and the memory 1630 may be connected to each other over the communications line 1640. The communications line 1640 may be a peripheral component interconnect (peripheral component interconnect, PCI for short) bus, an extended industry standard architecture (extended industry standard architecture, EISA for short) bus, or the like. The communications line 1640 may be classified into an address bus, a data bus, a control bus, and the like. For ease of representation, only one thick line is used for representing the bus in FIG. 16, but this does not mean that there is only one bus or only one type of bus.

Embodiments of this application further provide a computer-readable storage medium, including instructions. When the instructions are run on a computer, the computer is enabled to perform the methods of the H-SMF in the method embodiments shown in FIG. 4 to FIG. 13, or perform the methods of the V-SMF in the method embodiments shown in FIG. 4 to FIG. 13, or perform the method of the V-SMF in the method embodiment shown in FIG. 14.

Embodiments of this application further provide a computer program product, including computer instructions. When the computer program product is run on a computer, the computer is enabled to perform the methods of the H-SMF in the method embodiments shown in FIG. 4 to FIG. 13, or perform the methods of the V-SMF in the method embodiments shown in FIG. 4 to FIG. 13, or perform the method of the V-SMF in the method embodiment shown in FIG. 14.

Embodiments of this application further provide a chip system, including a processor. The processor is coupled to a memory. The memory is configured to store a program or instructions. When the program or the instructions are executed by the processor, the chip system is enabled to perform the methods of the H-SMF in the method embodiments shown in FIG. 4 to FIG. 13, or perform the methods of the V-SMF in the method embodiments shown in FIG. 4 to FIG. 13, or perform the method of the V-SMF in the method embodiment shown in FIG. 14.

Embodiments of this application further provides a communications system, including one or more of the following: an H-SMF, a V-SMF, an EASDF, or UE, where the H-SMF may be configured to implement the steps performed by the H-SMF in the method embodiments shown in FIG. 4 to FIG. 13, the V-SMF may be configured to implement the steps performed by the V-SMF in the method embodiments shown in FIG. 4 to FIG. 13, the H-EASDF may be configured to implement the steps performed by the H-EASDF in the method embodiments shown in FIG. 4 to FIG. 13, and the UE may be configured to implement the steps performed by the UE in the method embodiments shown in FIG. 4 to FIG. 13.

Embodiments of this application further provide a communications system, including one or more of the following: an H-SMF, a V-SMF, an H-EASDF, or UE, where the H-SMF may be configured to implement the steps performed by the H-SMF in the method embodiment shown in FIG. 14, the V-SMF may be configured to implement the steps performed by the V-SMF in the method embodiment shown in FIG. 14, the H-EASDF may be configured to implement the steps performed by the H-EASDF in the method embodiment shown in FIG. 14, and the UE may be configured to implement the steps performed by the UE in the method embodiment shown in FIG. 14.

All or a part of the foregoing embodiments may be implemented through software, hardware, firmware, or any combination thereof. When the software is used for implementation, all or a part of the implementation may be implemented in a form of a computer program product. The computer program product includes one or more computer instructions. When the computer program instructions are loaded and executed on the computer, procedures or functions according to embodiments of this application are all or partially generated. The computer may be a general-purpose computer, a dedicated computer, a computer network, or another programmable apparatus. Computer instructions may be stored in a computer-readable storage medium, or may be transmitted from one computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, wireless, or microwave) manner. The computer-readable storage medium may be any usable medium accessible by a computer, or a data storage device such as a server or a data center integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logical units and circuits described in embodiments of this application may implement or operate the described functions by using a general-purpose processor, a digital signal processor, an application-specific integrated circuit (ASIC), a field programmable gate array (FPGA) or another programmable logic apparatus, discrete gate or transistor logic, discrete hardware components, or any combination of the foregoing designs. The general-purpose processor may be a microprocessor. Optionally, the general-purpose processor may also be any conventional processor, controller, microcontroller, or state machine. The processor may also be implemented by a combination of computing apparatuses, for example, the digital signal processor and the microprocessor, a plurality of microprocessors, one or more microprocessors combined with one digital signal processor core, or any other similar configuration.

In one or more example designs, the foregoing functions described in this application may be implemented by hardware, software, firmware, or any combination thereof. If the functions are implemented in software, the functions may be stored in a computer-readable medium, or may be transmitted to the computer-readable medium in a form of one or more instructions or code. The computer-readable medium includes a computer storage medium and a communications medium that facilitates transfer of a computer program from one place to another. The storage medium may be an available medium that can be accessed by any general-purpose or special computer. For example, such a computer-readable medium may include but is not limited to a RAM, a ROM, an EEPROM, a CD-ROM, or another optical disc storage, a magnetic disk storage, or another magnetic storage apparatus, or any other medium that may be used for carrying or storing program code in a form of instructions or a data structure or in a form that can be read by a general or special computer or a general or special processor. In addition, any connection may be properly defined as a computer-readable medium. For example, if software is transmitted from a website, a server, or another remote resource by using a coaxial cable, an optical fiber computer, a twisted pair, a digital subscriber line (DSL), or in a wireless manner such as infrared, wireless, or microwave, the software is also included in the defined computer-readable medium. A disc (disk) and a magnetic disk (disc) include a compressed disk, a laser disk, an optical disc, a digital versatile disc (English: Digital Versatile Disc, DVD for short), a floppy disk, and a Blu-ray disc. The disk generally copies data in a magnetic manner, and the disc generally copies data optically in a laser manner. The foregoing combination may also be included in a computer-readable medium.

A person skilled in the art should be aware that, in the foregoing one or more examples, the functions described in this application may be implemented by hardware, software, firmware, or any combination thereof. When the functions are implemented by using the software, the functions may be stored in the computer-readable medium or transmitted as one or more instructions or codes in the computer-readable medium. The computer-readable medium includes a computer storage medium and a communications medium, where the communications medium includes any medium that facilitates transmission of a computer program from one place to another. The storage medium may be any available medium that can be accessed by a general-purpose or dedicated computer.

Although this application is described with reference to specific features and embodiments of this application, it is obvious that, various modifications and combinations may be made to the application without departing from the spirit and scope of this application. Correspondingly, the specification and accompanying drawings are merely examples of descriptions of this application defined by the appended claims, and are considered as any all modifications, variations, combinations, or equivalents that cover the scope of this application. It is clear that a person skilled in the art can make various modifications and variations to this application without departing from the scope of this application. In this way, this application is intended to cover these modifications and variations provided that these modifications and variations of this application fall within the scope of protection defined by the claims of this application and their equivalent technologies.

## Claims

1. A communications method in a roaming scenario, comprising:
determining, by a home session management function H-SMF, that a data network access identifier DNAI corresponding to a user equipment UE location changes; and
sending, by the H-SMF, a first message to a visited session management function V-SMF based on that the DNAI corresponding to the UE location changes, wherein
the V-SMF is a V-SMF that provides a service for UE after the DNAI corresponding to the UE location changes, the first message indicates the V-SMF to send a session modification command to the UE, and the session modification command indicates the UE to re-query an edge application server EAS.

2. The method according to claim 1, wherein before the determining, by an H-SMF, that a DNAI corresponding to UE location changes, the method further comprises:
receiving, by the H-SMF, one or more of the following from the V-SMF: a first DNAI, first service information corresponding to the first DNAI, a second DNAI, second service information corresponding to the second DNAI, and first indication information, wherein
the first DNAI is a DNAI used before the DNAI corresponding to the UE location changes;
the second DNAI is a DNAI obtained after the DNAI corresponding to the UE location changes; and
the first indication information indicates that the DNAI corresponding to the UE location changes.

3. The method according to claim 1 or 2, wherein the first message comprises one or more of the following: the first service information, the second service information, third service information, and second indication information, wherein
the third service information is determined based on the first service information and the second service information; and
the second indication information indicates the V-SMF to send the session modification command to the UE.

4. The method according to any one of claims 1 to 3, further comprising:
receiving, by the H-SMF, a context request from the V-SMF; and
sending, by the H-SMF, a context response to the V-SMF, wherein
the context response comprises the first service information, the first service information is service information corresponding to the first DNAI, and the first DNAI is a DNAI used before the DNAI corresponding to the UE location changes.

5. The method according to any one of claims 1 to 4, further comprising:
sending, by the H-SMF, a second message to a home edge application server discovery function H-EASDF based on that the DNAI changes, wherein the second message indicates to update a domain name system DNS handling rule in the H-EASDF.

6. A communications method in a roaming scenario, comprising:
receiving, by a visited session management function V-SMF, a first message from a home session management function H-SMF, wherein the V-SMF is a V-SMF that provides a service for UE after a data network access identifier DNAI corresponding to a user equipment UE location changes; and
in response to the first message, sending, by the V-SMF, a session modification command to the UE, wherein the session modification command indicates the UE to re-query an edge application server EAS.

7. The method according to claim 6, wherein before the receiving, by a V-SMF, a first message from an H-SMF, the method further comprises:
sending, by the V-SMF to the H-SMF, one or more of the following: first DNAI, first service information corresponding to the first DNAI, second DNAI, second service information corresponding to the second DNAI, and first indication information, wherein
the first DNAI is a DNAI used before the DNAI corresponding to the UE location changes;
the second DNAI is a DNAI obtained after the DNAI corresponding to the UE location changes; and
the first indication information indicates that the DNAI corresponding to the UE location changes.

8. The method according to claim 6 or 7, wherein the first message is determined based on that the DNAI corresponding to the UE location changes.

9. The method according to any one of claims 6 to 8, wherein the first message comprises one or more of the following: first service information, second service information, third service information, and second indication information, wherein
the third service information is determined based on the first service information and the second service information; and
the second indication information indicates the V-SMF to send the session modification command to the UE.

10. The method according to any one of claims 6 to 9, further comprising:
sending, by the V-SMF, a context request to a first network element; and
receiving, by the V-SMF, a context response from the first network element, wherein
the first network element is the H-SMF, or the first network element is another V-SMF that provides a service for the UE before the DNAI corresponding to the UE location changes; and
the context response comprises first service information, the first service information is service information corresponding to first DNAI, and the first DNAI is a DNAI used before the DNAI corresponding to the UE location changes.

11. The method according to any one of claims 6 to 10, wherein the sending, by the V-SMF, a session modification command to the UE comprises:
determining, by the V-SMF based on the first message, that the DNAI corresponding to the UE location changes; and
sending, by the V-SMF, the session modification command to the UE based on that the DNAI corresponding to the UE location changes.

12. The method according to any one of claims 6 to 11, wherein the session modification command comprises one of the following:
the first service information, wherein the first service information corresponds to a first service, and the first service information indicates the UE to re-query an EAS that provides the first service;
the second service information, wherein the second service information corresponds to a second service, and the second service information indicates the UE to re-query an EAS that provides the second service; and
third service information, wherein the third service information is determined based on the first service information and the second service information, the third service information corresponds to a third service, and the third service information indicates the UE to re-query an EAS that provides the third service.

13. A communications apparatus, comprising a module configured to perform the method according to any one of claims 1 to 5, or a module configured to perform the method according to any one of claims 6 to 12.

14. A communications apparatus, comprising a processor, wherein the processor is connected to a memory, the memory is configured to store a computer program, and the processor is configured to execute the computer program stored in the memory, so that the apparatus performs the method according to any one of claims 1 to 5 or the method according to any one of claims 6 to 12.

15. A computer-readable storage medium, wherein the computer-readable storage medium stores a computer program or instructions; and when the computer program or instructions are executed by a communications apparatus, the method according to any one of claims 1 to 5, or the method according to any one of claims 6 to 12 are implemented.

16. A computer program product, wherein the computer program product comprises a computer program or instructions; and when the computer program or instructions are executed by a communications apparatus, the method according to any one of claims 1 to 5, or the method according to any one of claims 6 to 12 are implemented.
